(19) Europäisches Patentamt
European Patent Office
Office européen des brevets

(11) EP 0 644 463 B1

# (12) EUROPÄISCHE PATENTSCHRIFT

(45) Veröffentlichungstag und Bekanntmachung des Hinweises auf die Patenterteilung:
**10.05.2000 Patentblatt 2000/19**

(51) Int. Cl.[7]: **G03G 9/097**, C09D 5/03, C09D 5/46, C08G 63/91, H01G 7/02

(21) Anmeldenummer: **94113746.5**

(22) Anmeldetag: **02.09.1994**

(54) **Polyestersalze und ihre Verwendung als Ladungssteuermittel**

Polyester salts and their use as charge control agent

Sels de polyester et leur utilisation comme agent de contrôle de charge

(84) Benannte Vertragsstaaten:
**BE CH DE FR GB IT LI NL**

(30) Priorität: **22.09.1993 DE 4332170**

(43) Veröffentlichungstag der Anmeldung:
**22.03.1995 Patentblatt 1995/12**

(73) Patentinhaber: **Clariant GmbH**
**65929 Frankfurt am Main (DE)**

(72) Erfinder:
- **Macholdt, Hans-Tobias, Dr.**
  **D-64297 Darmstadt (DE)**
- **Baur, Rüdiger, Dr.**
  **D-65817 Eppstein/Taunus (DE)**
- **Zöller, Joachim, Dr.**
  **D-55128 Mainz (DE)**

(56) Entgegenhaltungen:
**US-A- 4 837 393** **US-A- 4 855 396**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7 (HRS)/3.6

## Beschreibung

Die vorliegende Erfindung liegt auf dem technischen Gebiet der Ladungssteuermittel in Tonern und Entwicklern für elektrophotographische Aufzeichnungsverfahren, in Pulvern und Pulverlacken zur Oberflächenbeschichtung, in Elektretmaterialien, insbesondere in Elektretfasern, sowie in Trennvorgängen.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. (L.B. Schein, "Electrophotography and Development Physics"; Springer Series in Electrophysics 14; Springer-Verlag, 1988).

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig sogenannte Ladungssteuermittel zugesetzt. Da Tonerbindemittel in der Regel eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen. Ladungssteuermittel, die nicht verhindern können, daß der Toner oder Entwickler bei längerer Gebrauchsdauer eine hohe Ladungsdrift zeigt (Alterung), die sogar bewirken kann, daß der Toner oder Entwickler eine Ladungsumkehr erfährt, sind daher für die Praxis ungeeignet.

Während für Schwarztoner schwarze, blaue oder dunkle Ladungssteuermittel eingesetzt werden können, sind für Farbtoner wegen der Coloristik Ladungssteuermittel ohne Eigenfarbe von besonderem Interesse.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

Von Farbmitteln ist bekannt, daß sie die triboelektrische Aufladung von Tonern teilweise nachhaltig beeinflussen können (H.-T. Macholdt, A. Sieber, Dyes & Pigments 9 (1988), 119-127). Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden.

Da dieses Vorgehen sehr aufwendig ist, sind hochwirksame farblose Ladungssteuermittel erforderlich, die imstande sind, das unterschiedliche triboelektrische Verhalten verschiedener Farbmittel zu kompensieren und dem Toner die gewünschte Aufladung zu verleihen. Auf diese Art und Weise können triboelektrisch sehr unterschiedliche Farbmittel anhand einer einmal erstellten Tonerbasisrezeptur mit ein und demselben Ladungssteuermittel in den verschiedenen erforderlichen Tonern (Gelb, Cyan, Magenta und gegebenenfalls Schwarz) eingesetzt werden.

Darüberhinaus ist für die Praxis wichtig, daß die Ladungssteuermittel eine hohe Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C, besser noch 250°C, von großem Vorteil. Wichtig ist auch, daß die Thermostabilität über einen längeren Zeitraum (ca. 30 Minuten) und in verschiedenen Bindemittelsystemen gewährleistet ist. Dies ist bedeutsam, da immer wieder auftretende Matrixeffekte zum frühzeitigen Zersetzen des Ladungssteuermittels im Tonerharz führen, wodurch eine dunkelgelbe oder dunkelbraune Färbung des Tonerharzes erfolgt und der Ladungssteuereffekt ganz oder teilweise verloren geht. Typische Tonerbindemittel sind Polymerisations-, Polyadditions- und Polykondensationsharze wie Styrol-, Styrolacrylat-, Styrolbutadien-, Acrylat-, Polyester-, Phenol- und Epoxidharze, einzeln oder in Kombination, die noch weitere Inhaltsstoffe, wie Farbmittel, Wachse oder Fließhilfsmittel, enthalten können oder im Nachhinein zugesetzt bekommen können. Für eine gute Dispergierbarkeit ist es von großem Vorteil, wenn das Ladungssteuermittel möglichst keine wachsartigen Eigenschaften, keine Klebrigkeit und einen Schmelz- oder Erweichungspunkt von > 150°C, besser > 200°C, aufweist. Eine Klebrigkeit führt häufig zu Problemen beim Zudosieren in die Tonerformulierung, und niedrige Schmelz- oder Erweichungspunkte können dazu führen, daß beim Eindispergieren keine homogene Verteilung erreicht wird, da sich das Material tröpfchenförmig im Trägermaterial zusammenschließt.

Außer in elektrophotographischen Tonern und Entwicklern können Ladungssteuermittel auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz,

Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Kleingegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:

a) Beim Corona-Verfahren wird der Pulverlack oder das Pulver an einer geladenen Corona vorbeigeführt und hierbei aufgeladen,
b) beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist. Auch eine Kombination von beiden Verfahren ist möglich.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.

Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüberhinaus ist gefunden worden, daß Ladungssteuermittel das Aufladungssowie das Ladungsstabilitätsverhalten von Elektretmaterialien, insbesondere Elektretfasern, erheblich verbessern können DE-A-43 21 289). Elektretfasern sind bisher hauptsächlich im Zusammenhang mit dem Problem der Feinststaubfiltration beschrieben worden. (Z.B. von Biermann, "Evaluation of permanently charged elektrofibrous filters", 17. DOE Nuclear Air Cleaning Conference, Denver, USA, (1982) sowie in Chemiefasern/Textilindustrie 40/92, (1990/9)). Die beschriebenen Filtermaterialien unterscheiden sich sowohl hinsichtlich der Materialien, aus denen die Fasern bestehen als auch bezüglich der Art und Weise wie die elektrostatische Ladung auf die Fasern aufgebracht wird. Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung auf unterschiedliche Weise erhalten, nämlich durch Corona- oder Triboaufladung.

Weiterhin ist bekannt, daß Ladungssteuermitteln in elektrostatischen Trennvorgängen, insbesondere in Trennvorgängen von Polymeren verwendet werden können. So beschreiben Y. Higashiyama et al. (J. Electrostatics 30, pp 203-212 (1993)) am Beispiel des äußerlich aufgebrachten Ladungssteuermittels Trimethyl-phenyl-ammonium-tetraphenylborat, wie Polymere für Recylingzwecke voneinander getrennt werden können. Ohne Ladungssteuermitel laden sich "Low Density Polyethylen (LDPE)" und "High Density Polyethylen (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel kann auch grundsätzlich an eine Einarbeitung derselben in das Polymer gedacht werden, um beispielsweise ein Polymer innerhalb der triboelektrischen Spannungsreihe zu verschieben und eine entsprechende Trennwirkung zu erhalten. Ebenso lassen sich auf diese Weise andere Polymere wie z.B. Polypropylen (PP) und/oder Polyethylenterephthalat (PET) und/oder Polyvinylchlorid (PVC) voneinander trennen.

Ebenso lassen sich auch z.B. Salzmineralien besonders gut selektiv trennen, wenn ihnen zuvor ein Oberflächenzusatz

zugegeben wurde (Oberflächenkonditionierung), der die substratspezifische elektrostatische Aufladung verbessert (A. Singewald, L. Ernst, Zeitschrift für Physikal. Chem. Neue Folge, Bd. 124, S. 223-248 (1981)).

Ladungssteuermittel sind in der Literatur zahlreich beschrieben. Allerdings weisen die bisher bekannten Ladungssteuermittel eine Reihe von Nachteilen auf, die den Einsatz in der Praxis stark einschränken oder gar unmöglich machen. So können Ladungssteuermittel, wie die in US-PS 4 656 112 beschriebenen Schwermetallkomplexe, oder die in EP-A-0 469 544 beschriebenen Azine und Nigrosine wegen ihrer hohen Eigenfarbe in Bunttonern sowie in weißen oder bunten Pulverlacken nicht eingesetzt werden.

Farblose Ladungssteuermittel auf Ammonium- und Immoniumbasis sind oft empfindlich gegen Licht oder mechanische Einwirkungen (US-PS 4 683 188) und thermisch labil, so daß sie Zersetzungsprodukte bilden, die sich nachtelig auf die triboelektrische Aufladung des Toners auswirken können (US-PS 4 684 596) und/oder eine starke, oft dunkelbraune, Eigenfarbe aufweisen. Darüberhinaus sind sie oft wachsartig, zum Teil wasserlöslich und/oder besitzen geringe Wirksamkeit als Ladungssteuermittel.

An sich geeignete Ladungssteuermittel auf Basis hochgradig fluorierter Ammonium- und Immoniumverbindungen (US-PS 5 069 994) haben den Nachteil einer aufwendigen Synthese, wodurch hohe Herstellungskosten für die entsprechenden Substanzen anfallen, und sind nicht ausreichend thermostabil.

Ladungssteuermittel auf Basis polymerer Ammoniumverbindungen (DE-A-4 029 653) führen zum Teil zu Amingeruch des Toners oder Entwicklers, und die Ladungskontrolleigenschaftten dieser Substanzen können sich durch relativ leichte Oxidation und Feuchtigkeitsaufnahme ändern. Des weiteren sind die Oxidationsprodukte gefärbt und daher störend vor allem in Farbtonern. Die vorstehend genannten Ladungssteuermittel für elektrophotographische Toner und Entwickler sind aufgrund ihrer Farbigkeit für den Einsatz in den überwiegend weißen oder klaren triboelektrisch oder elektrokinetisch versprühten Pulvern und Pulverlacken nicht geeignet. Des weiteren schränkt mangelnde Thermostabilität den Einsatz derartiger Ladungssteuermittel stark ein, da Pulverlacke beispielsweise bei über 200°C 15 Minuten lang eingebrannt werden. Die in US-PS 5 069 994 beanspruchten Ladungssteuermittel für Pulver und Pulverlacke sind aufgrund von Wachsartigkeit und Wasserlöslichkeit oder Hygroskopie schlecht zu handhaben und nur eingeschränkt anwendbar.

Die in EP-A-0 367 162 und in EP-A-0 476 647 beschriebenen Ammoniumverbindungen haben den Nachteil einer zu geringen Thermostabilität, der Unverträglichkeit mit speziellen Polyesterharzsystemen, sowie den des hohen Preises.

Ammoniumsalze auf Basis von Sulfoisophthalsäure und deren Derivate, wie z.B. in US-PS 4 789 614 beschrieben, haben wiederum den Nachteil einer geringen Stabilität in gängigen Bindemittelsystemen. So zeigen sie, 1 %ig in ein typisches Tonerbindemittel (Styrolacrylat oder Polyester) eingearbeitet, schon bei niedrigen Temperaturen (120 bis 140°C) bereits nach wenigen Minuten eine deutliche Vergilbung, was ihren Praxiseinsatz unmöglich macht.

Die in DE-A-4 037 518 beanspruchten Sulfoisophthalsäureharze haben den Nachteil, nur dann eine ausgeprägte Wirkung zu zeigen, wenn sie als dominierende Trägerkomponente eingesetzt werden, und führen dann zu Systemen mit einer oftmals unstabilen negativen Aufladung. Zur Erzielung einer Ladungsstabilität oder um gar eine positive Aufladung einzustellen, muß dem Bindemittel zusätzliches Ladungssteuermittel zugesetzt werden.

Die Aufgabe der vorliegenden Erfindung war es daher, verbesserte, besonders wirksame farblose Ladungssteuermittel zu finden. Neben dem schnellen Erreichen und der Konstanz der Aufladung sollten die Verbindungen eine hohe Thermostabilität (Zersetzungstemperatur > 200°C) aufweisen und in Wasser unlöslich oder schwerlöslich sein. Zudem sollte ihre Herstellung kostengünstig und die Synthese wenig aufwendig sein und möglichst auf organische Lösungsmittel im Reaktionsmedium verzichten.

Überraschenderweise hat es sich nun gezeigt, daß bestimmte Polymersalze, deren anionische Komponente ein bestimmter Polyester ist, besonders gute Ladungssteuereigenschaften und hohe Thermostabilität besitzen. Darüberhinaus sind diese Verbindungen ohne Eigenfarbe, in Wasser unlöslich oder schwerlöslich sowie einfach und kostengünstig herzustellen, wobei die Synthese meist in wäßrigem Medium möglich ist.

Gegenstand der vorliegenden Erfindung ist die Verwendung von Polymersalzen, deren anionische Komponente ein Polyester ist, der aus dem Reaktionsprodukt der einzelnen Komponenten a), b) und c) sowie gegebenenfalls d) und gegebenenfalls e) besteht, wobei

a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung mit einer Funktionalität > 2, deren funktionelle Gruppen Hydroxyl oder Carboxyl, oder Hydroxyl und Carboxyl, sind und
e) eine Monocarbonsäure ist

und deren kationische Komponente Wasserstoffatome, Metallkationen, substituierte Ammonium-Kationen, Immonium-Kationen, Guanidinium-Kationen, oder ein Gemisch der genannten Kationen ist,
als Ladungssteuermittel und Aufladungsverbesserer in elektrophotographischen Tonern und Entwicklern, in triboelektrisch oder elektrokinetisch versprühbaren Pulvern und Pulverlacken sowie in Elektretmaterialien. Als Ladungssteuermittel und Aufladungsverbesserer in Pulvern und Pulverlacken sowie in Elektretmaterialien kommen auch Polymersalze, wie vorstehend beschrieben, deren kationische Komponente Phosphonium-, Arsonium- oder Stibonium-Kationen sein können, in Betracht.

Bevorzugt sind Polymersalze, deren anionische Komponente ein Polyester ist, der aus dem Reaktionsprodukt der Komponenten a] bis ei besteht, wobei die Komponenten

a) 25 bis 55 Mol-%, vorzugsweise 40 bis 50 Mol-%,
b) 0,1 bis 15 Mol-%, vorzugsweise 0,5 bis 10 Mol-%,
c) 10 bis 60 Mol-%, vorzugsweise 30 bis 55 Mol-%,
d) 0 bis 40 Mol-%, vorzugsweise 5 bis 30 Mol-%, und
e) 0 bis 20 Mol-%, vorzugsweise 0 bis 10 Mol-%, der Summe der Monomeren a) bis e) 100 Mol-% ausmachen.

Die Molmassen der Polyester, die mit Hilfe der Gelpermeationschromatographie bestimmt werden können, liegen zwischen 300 und 50.000, insbesondere zwischen 500 und 10.000, bevorzugt zwischen 800 und 5000.

In der Summe der Komponenten a) bis e) beträgt das Verhältnis der Summe der Hydroxyläquivalente zur Summe der Carboxyläquivalente 0,5 bis 2,0. Unter Hydroxyläquivalenten wird das Moläquivalent an Hydroxylgruppen verstanden.

Unter Carboxyläquivalenten wird das Moläquivalent an Carboxylgruppen verstanden.

Der Gehalt an freien Hydroxylgruppen im Polyester beträgt 10 bis 350, vorzugsweise 100 bis 250, Millimol OH/100 g Polyester. Der Gehalt an freien, oder neutralisierten Säuregruppen, insbesondere Sulfo- und Carboxylgruppen, beträgt 5 bis 350, vorzugsweise 9 bis 120, Millimol COOH oder $SO_3H$/100 g Polyester.

Die Dicarbonsäurekomponente (a) des Polyesters ist vorzugsweise eine aromatische, aliphatische oder cycloaliphatische Alkyl- oder Alkylendicarbonsäure, eine Dimerfettsäure oder eine Mischung zweier oder mehrerer der genannten Dicarbonsäuren.
Beispiele für diese Dicarbonsäuren sind Oxal-, Malon-, Glutar-, Adipin-, Pimelin-, Azelain-, Sebacin-, Fumar-, Malein- und Itaconsäure, 1,3-Cyclopentandicarbonsäure, 1,2-Cyclohexandicarbonsäure, 1,3-Cyclohexandicarbonsäure, 1,4-Cyclohexandicarbonsäure, Phthal-, Terephthal- und Isophthalsäure, 2,5-Norbornandicarbonsäure, 1,4-Naphthalindicarbonsäure, Diphenyldicarbonsäure, 4,4'-Sulfonyldibenzoesäure und 2,5-Naphthalindicarbonsäure sowie deren Ester und deren Anhydride.
Besonders bevorzugte Dicarbonsäurekomponenten (a) sind Phthal-, Isophthal-und Terephthalsäure, Phthalsäureanhydrid, Adipinsäure, Bernsteinsäure, Bernsteinsäureanhydrid, Dimerfettsäuren, Sebacin- und Azelainsäure, 1,3-Cyclohexandicarbonsäure und Glutarsäure sowie deren Ester.

Bei Komponente (b) des Polyesters handelt es sich um eine difunktionelle, aromatische, cycloaliphatische oder aliphatische Verbindung mit reaktiven Carboxyl- und/oder Hydroxylgruppen, die mindestens eine $-SO_3X$-Gruppe aufweist, wobei X Wasserstoff oder ein Metallion, wie z.B. $Na^+$, $Li^+$, $K^+$, $Mg^{2+}/2$, $Ca^{2+}/2$, $Cu^{2+}/2$ oder ein stickstoffhaltiges Kation einer aliphatischen, cycloaliphatischen oder aromatischen Verbindung, wie z.B. Ammoniak, Triethylamin, Dimethylethanolamin, Diethanolamin, Triethanolamin oder Pyridin, ist. Die Sulfogruppen sind vorzugsweise an einen aromatischen Kern, beispielsweise Phenyl, Naphthyl, Diphenyl, Methylendiphenyl oder Anthracenyl, gebunden.
Beispiele für die Komponente b) sind Sulfoisophthalsäure, Sulfoterephthalsäure, Sulfophthalsäure, Sulfosalicylsäure, Sulfobernsteinsäure und deren Alkylester sowie eine Mischung der genannten Verbindungen.
Besonders bevorzugt sind die Na-Salze von Sulfoisophthalsäure, 5-Sulfoisophthalsäuredimethylester, Sulfosalicylsäure und Sulfobernsteinsäure.

Die Komponente c) ist ein aliphatisches, cycloaliphatisches oder aromatisches Glykol, ein Dihydroxypolyether oder ein Polycarbonatdiol.
Als Beispiele für Glykole seien genannt: Ethylenglykol, 1,2-Propandiol, 1,3-Propandiol, 2,2-Dimethyl-1,3-propandiol, 1,3-Butandiol, 1,4-Butandiol, 1,5-Pentandiol, 1,6-Hexandiol, 2,2,4-Trimethyl-1,6-hexandiol, 1,2-Cyclohexandimethanol, 1,3-Cyclohexandimethanol, 1,4-Cyclohexandimethanol, Di(4-hydroxy-cyclohexyl)-2,2'-isopropan, p-Xylylendiol, 2-Ethyl- und 2-Butylpropandiol.
Als Dihydroxy-polyether kommen Verbindungen der Formel

$$H\text{-}[\text{-}O\text{-}(CHR)_n\text{-}]_m\ OH$$

in Betracht, in der R Wasserstoff oder ein $C_1$-$C_4$-Alkylrest ist, n eine ganze Zahl von 2 bis 6 und m eine Zahl von 10 bis 120 ist, beispielsweise Poly(oxytetramethylen)-glykole, Poly(oxyethylen)glykole und Poly(oxypropylen)glykole, deren Molekulargewichte vorzugsweise im Bereich von 400 bis 5000 liegen.

Als Polycarbonatdiole kommen Verbindungen der allgemeinen Formel

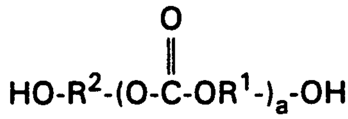

in Betracht, worin $R^1$ und $R^2$ unabhängig voneinander einen $C_1$-$C_{12}$-Alkylenrest oder $C_5$-$C_{12}$-Cycloalkylenrest und a eine Zahl von 1 bis 20 bedeuten. Die Polycarbonatdiole lassen sich durch Umsetzung von Diolen wie Propandiol-1,3, Butandiol-1,4, Hexandiol-1,6, Diethylenglykol, Triethylenglykol, 1,4-Bishydroxymethylcyclohexan, 2,2-Bis(4-hydroxycyclohexyl)propan oder Neopentylglykol mit Dicarbonaten, wie Dimethyl-, Diethyl- oder Diphenylcarbonat, oder Phosgen herstellen. Gemische solcher Diole können ebenfalls eingesetzt werden.

Die polyfunktionelle Komponente (d) enthält bevorzugt 3 bis 6 Hydroxyl-und/oder Carboxylgruppen, beispielsweise Trimethylolpropan, Trimethylolethan, Glycerin, Ditrimethylolpropan, Pentaerythrit, Dipentaerythrit, Bishydroxyalkancarbonsäuren, wie Dimethylolpropionsäure, und Trimellitsäureanhydrid, ein Polyanhydrid, wie beispielsweise in DE-A-28 11 913 beschrieben, oder ein Polycarbonatpolyol, das beispielsweise durch Umsetzung von Trimethylolpropan oder Pentaerythrit mit den vorstehend genannten Dicarbonaten hergestellt wird, oder eine Mischung zweier oder mehrerer dieser Verbindungen.

Bei den monofunktionellen Carbonsäuren (e) kommen vorzugsweise gesättigte oder ungesättigte $C_{12}$-$C_{18}$-Fettsäuren, wie Caprinsäure, Laurinsäure, Stearinsäure, Palmitinsäure, Linolsäure und Linolensäure oder verzweigte aliphatische $C_5$-$C_{10}$- Carbonsäuren, wie Isovaleriansäure und Isooctansäure, in Betracht.

Als kationische Komponente kommt ein Diallylammoniumkation der allgemeinen Formel (1) in Betracht

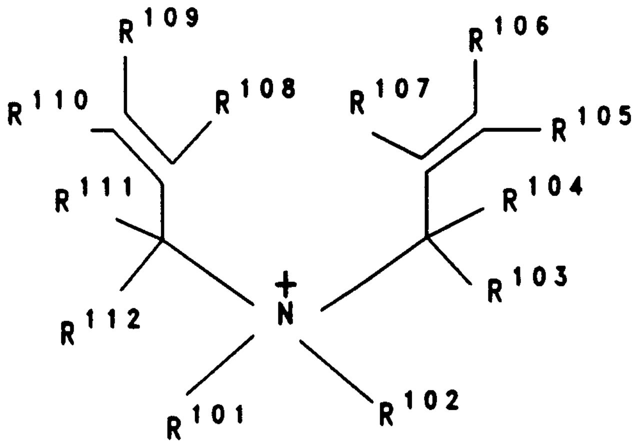

(1)

wobei die Reste

$R^{101}$ bis $R^{112}$ unabhängig voneinander jeweils ein Wasserstoffatom, Halogenatom, einen Hydroxyl-Rest, einen Alkoxy-Rest, einen primären, sekundären oder tertiären Amino-Rest, einen Carbonsäure- oder Carbonsäureester-Rest, einen Acylrest, einen Sulfonsäure- oder Sulfonsäureester-Rest, einen Cyano- oder Nitro-Rest oder einen Rest auf Basis eines $C_1$-$C_{30}$-aliphatischen, $C_7$-$C_{60}$-araliphatischen oder $C_6$-$C_{30}$-aromatischen Kohlenwasserstoffs, der durch Heteroatome unterbrochen sein kann, bedeuten.

Vorzugsweise bedeuten

$R^{101}$ und $R^{102}$ Wasserstoffatome, geradkettige oder verzweigte, gesättigte oder ungesättigte Alkyl($C_1$-$C_{18}$)-Reste, Polyoxalkylen-Reste, bevorzugt Polyoxethylen- und/oder Polyoxpropylen-Reste, der allgemeinen Formel Alkylen($C_1$-$C_5$)$_q$-R', worin R' ein Wasserstoffatom, einen Alkyl($C_1$-$C_4$)-Rest oder einen Acyl-Rest, insbesondere den Acetyl-, Benzoyl- oder Naphthoyl-Rest, und q eine Zahl von 1 bis 10 ist; Phenyl-, Naphthyl- oder Pyridyl-Reste; Tolyl-Reste; Aralkoxy-Reste, insbesondere Methoxyphenyl; Alkaryl-Reste, insbesondere Benzyl; oder Cycloalkyl-Reste, vorzugsweise Cyclopentyl- oder Cyclohexylreste, oder in denen die vorstehend genannten Reste zusätzlich ein oder mehrere Heteroatome, vorzugsweise Stickstoff, Sauerstoff, Schwefel, Phosphor oder eine Kombination davon enthalten,

oder in denen die vorstehend genannten Reste durch einen oder mehrere Carboxamid-Reste, Sulfonamid-Reste, Urethan-Reste, Keto-Reste, primäre, sekundäre oder tertiäre Amino-Reste, Nitro-Reste, Ether-Reste, insbesondere Alkylen($C_2$-$C_4$)-O-Alkyl($C_1$-$C_4$), Alkyl($C_1$-$C_4$)-Reste, Alkoxy($C_1$-$C_4$)-Reste, Aroxy-Reste, insbesondere Phenoxy-Reste,

Halogenalkyl($C_1$-$C_{30}$)-Reste, Halogenalkoxy-($C_1$-$C_{30}$)-Reste, Ester-Reste, insbesondere -C(O)O-Alkyl($C_1$-$C_4$), ein oder mehrere Halogenatome, Hydroxyl-, Carboxyl-, Sulfonsäure-, Cyano-oder

Mercapto-Gruppen oder durch eine Kombination davon substituiert sind; oder in denen $R^{101}$ und $R^{102}$ zusammen ein gesättigtes oder ungesättigtes, aromatisches oder nichtaromatisches 5- bis 7-gliedriges Ringsystem bilden, vorzugsweise das Pyridinium-Ringsystem, das weitere Heteroatome, bevorzugt Stickstoff, Sauerstoff, Schwefel oder eine Kombination davon, im Ring enthalten kann, insbesondere das Morpholinium-Ringsystem, und das Ringsystem substituiert und/oder durch Ankondensation von oder Verbrückung zu weiteren Ringsystemen modifiziert sein kann, insbesondere das Chinolinium-Ringsystem.

Die Reste $R^{103}$ bis $R^{112}$ haben vorzugsweise die vorstehend für $R^{101}$ und $R^{102}$ genannten Bedeutungen oder sind Halogenatome.

Besonders bevorzugte Kationen der Formel (1) sind solche, in denen $R^{101}$ und $R^{102}$ jeweils Methyl und $R^{103}$ bis $R^{112}$ jeweils ein Proton bedeuten.

Als kationische Komponente kommt weiterhin ein homo- oder copolymeres Pyrrolidinium-Kation der allgemeinen Formel (2) in Betracht

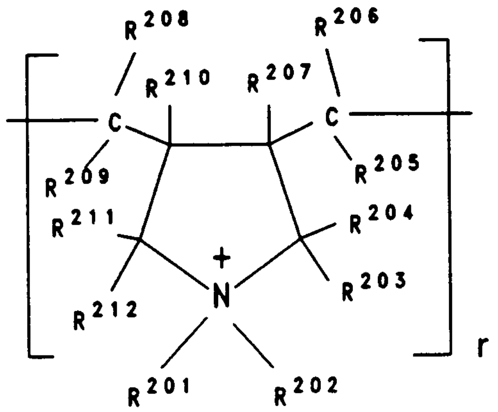

(2)

worin r einen Wert hat, der Molekulargewichten zwischen 500 und 1 000 000, vorzugsweise 40 000 bis 400 000, entspricht und wobei die Reste $R^{201}$ bis $R^{212}$ die für $R^{101}$ bis $R^{112}$ genannten Bedeutungen haben.

Die bevorzugten Bedeutungen der Reste $R^{201}$ und $R^{202}$ sowie die der Reste $R^{203}$ bis $R^{212}$ entsprechen den bevorzugten Bedeutungen der Reste $R^{101}$ und $R^{102}$ sowie der Reste $R^{103}$ bis $R^{112}$.

Besonders bevorzugte Kationen der Formel (2) sind solche, in denen $R^{201}$ und $R^{202}$ Methyl und $R^{203}$ bis $R^{212}$ jeweils ein Proton bedeuten.

Als kationische Komponente kommt weiterhin ein homo- oder copolymeres Morpholinium- oder Pyrrolidinium-Kation in Betracht, das durch Cyclisierung eines Diallylammonium-Kations der vorstehend angegebenen Formel (1) zu einem Sechsring oder Fünfring entsteht, und durch ein oder mehrere zweiwertige Reste $-SO_2-$ miteinander zu einem Polymer verbunden ist, wobei die so entstandenen Polymerkationen ein Molekulargewicht zwischen 500 und 5 000 000 haben und

das Verhältnis der Anzahl der Diallylammonium-Kationen und der Anzahl der zweiwertigen $-SO_2$-Reste 1:0,01 bis 1:100 beträgt.

Als kationische Komponente kommt weiterhin ein hochgradig fluoriertes Ammoniumion der allgemeinen Formel (3)

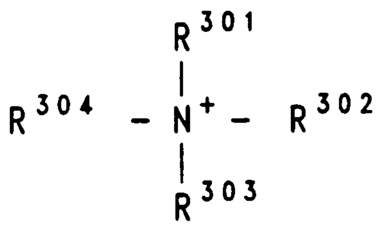

(3)

in Betracht, in welcher mindestens einer der Reste $R^{301}$ bis $R^{302}$ einen geradkettigen fluorhaltigen ungesättigten und/oder gesättigten Alkylrest mit 4 bis 30 C-Atomen und höchstens drei der Reste $R^{301}$ bis $R^{304}$ unabhängig vonein-

ander Wasserstoff oder geradkettige oder verzweigte Alkyl- oder Hydroxyalkylreste mit 1 bis 30 C-Atomen bedeuten. Besonders bevorzugt bedeutet mindestens einer der Reste $R^{301}$ bis $R^{304}$ die Gruppe $-CH_2-CH=CF-Rf(Rf = C_5F_{11}-C_{11}F_{23})$, die Gruppe $-CH_2-CH=CF-C_xF_{2x+1}$, wobei x die Zahlen 5, 7 oder 9 ist, z.B. die Gruppe $-CH_2-CH=CF-C_7F_{15}$, und höchstens drei der Reste $R^{301}$ bis $R^{304}$ sind unabhängig voneinander eine Methyl-, Ethyl-, Butyl- oder Hydroxyethylgruppe. Besonders bevorzugte Verbindungen der Formel (3) sind solche, in denen $R^{301}$ und $R^{302}$ Ethyl, $R^{303}$ Methyl und $R^{304}$ $R_f-CF=CH-CH_2-$ bedeuten.

Als kationische Komponente kommt weiterhin ein Immonium-Kation der allgemeinen Formel (4) in Betracht,

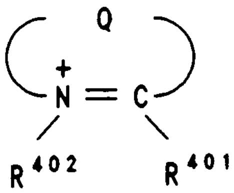

(4)

in welcher Q zusammen mit dem Bestandteil -N=C- ein ein- oder mehrkerniges Ringsystem mit 4 bis 17 C-Atomen, das zusätzlich durch 1 bis 4 Heteroatome unterbrochen sein und 2 bis 9 Doppelbindungen enthalten kann, welches in beliebiger Position durch Fluor-, Chlor-, Brom- oder Jodatome, Alkoxy($C_1$-$C_6$)-, Alkyl($C_1$-$C_6$)-, Nitro- oder Aminogruppen substituiert sein kann, $R^{402}$ einen fluorhaltigen Alkyl($C_1$-$C_{30}$)-Rest und $R^{401}$ ein Wasserstoff-, Fluor-, Chlor-, Brom- oder Jodatom, eine Alkyl($C_1$-$C_6$)-, Alkoxy($C_1$-$C_6$)-, Nitro- oder Aminogruppe bedeuten.

Besonders bevorzugt bildet Q zusammen mit dem Bestandteil -N=C- ein Pyridin-, Pyrazin- oder Chinolinringsystem und $R^{402}$ bedeutet eine $C_8F_{17}-CH_2-CH_2$-Gruppe und $R^{401}$ ein Wasserstoffatom.

Als kationische Komponente kommt weiterhin ein Immonium-Kation der Formel (4a)

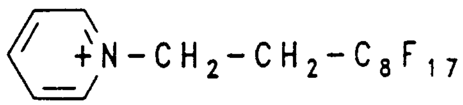

(4a)

in Betracht.

Die Herstellung der unter den Formeln (3), (4), (4a) genannten Ammonium- und Immoniumverbindungen ist an sich literaturbekannt und wird z.B. in DE-A 19 22 277, DE-A 22 44 297, DE-A 33 06 933, US-PS 3 535 381 und der darin zitierten Literatur beschrieben.

Als kationische Komponente kommen weiterhin Kationen der Formeln (7) und (8) in Betracht,

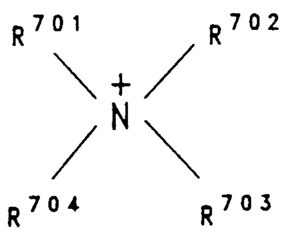

(7)

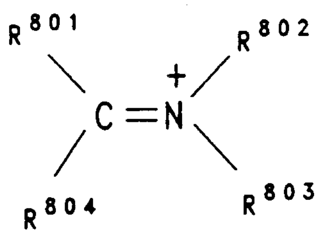

(8)

worin die Reste $R^{601}$ bis $R^{604}$, $R^{701}$ bis $R^{704}$ und $R^{801}$ bis $R^{804}$ die für $R^{101}$ bis $R^{112}$ genannten Bedeutungen haben.

Als kationische Komponente kommen weiterhin ein-, zwei- und dreiwertige Metallkationen in Betracht, vorzugsweise $Na^+$, $K^+$, $Ca^{2+}/_2$, $Mg^{2+}/_2$, $Cr^{3+}/_3$, $Al^{3+}/_3$, $Fe^{2+}/_2$, $Fe^{3+}/_3$ und $Zn^{2+}/_2$.

Als kationische Komponente in Polymersalzen, die als Aufladungsverbesserer und Ladungssteuermittel in Pulvern und Pulverlacken verwendet werden, kommt weiterhin ein hochgradig fluoriertes Phosphoniumion der allgemeinen Formel (5)

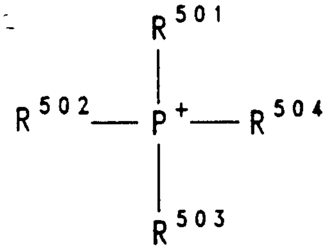

(5)

in Betracht, in welcher mindestens einer der Reste $R^{501}$ bis $R^{504}$ einen geradkettigen oder verzweigten, fluorsubstituierten, gesättigten Alkylrest mit 1 bis 30 C-Atomen und 3 bis 50 F-Atomen bedeutet, welcher weitere Halogenatome, Hydroxyl-, Chlormethyl-, Carbonsäureamid-, Sulfonsäureamid-, Urethan-, Keto-, Amino- oder $R^{505}$-O-$R^{506}$-Gruppen, worin $R^{505}$ und $R^{506}$ Alkyl($C_1$-$C_{30}$)-Reste darstellen, enthalten kann, oder mindestens einer der Reste $R^{501}$ bis $R^{504}$ einen fluorsubstituierten Arylrest oder einen am aromatischen Kern fluorsubstituierten Aralkylrest darstellt, wobei der Aryl- oder Aralkylrest am aromatischen Kern zusätzlich durch gesättigte oder ungesättigte, geradkettige oder verzweigte Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder weitere Halogenatome substituiert sein kann und im Falle eines Aralkylrestes die Alkylbrücke zwischen Phosphoratom und aromatischem Ring 1 bis 30 C-Atome enthält, und höchstens drei der Reste $R^{501}$ bis $R^{504}$ unabhängig voneinander Wasserstoffatome, geradkettige oder verzweigte, ungesättigte oder gesättigte, substituierte oder unsubstituierte Alkylreste mit 1 bis 30 C-Atomen, Aryl- oder Aralkylreste, die am aromatischen Kern durch Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder Halogenatome substituiert sein können, bedeuten.

Besonders bevorzugte Verbindungen der allgemeinen Formel (5) sind solche, in denen $R^{504}$ die Gruppe $-CH_2-CH_2-C_8F_{17}$ oder $-CH_2-CH_2-Rf$ (mit Rf = $C_6F_{13}$ bis $C_{11}F_{23}$) und höchstens drei der Reste $R^{502}$ bis $R^{504}$ einen Phenylrest bedeuten, insbesondere die Verbindung, in der $R^{501}$ $C_8F_{17}-CH_2-CH_2$ und $R^{502}$ bis $R^{504}$ Phenyl bedeuten; sowie

Kationen der Formel (6),

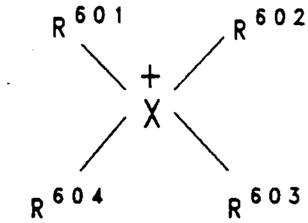

(6)

worin X die Bedeutung P, As oder Sb hat und die Reste $R^{601}$ bis $R^{604}$ die für $R^{101}$ bis $R^{112}$ genannten Bedeutungen haben.

Die Herstellung der anionischen Polyesterkomponente ist an sich bekannt und in der Literatur zahlreich beschrieben, beispielsweise in B. Vollmert, "Grundriß der Makromolekularen Chemie", E. Vollmert Verlag, Karlsruhe 1982.

Gegebenenfalls, um eine möglichst quantitative Cokondensation der monomeren Sulfoverbindung (b) zu erreichen, kann es erforderlich sein, die Synthese der beschriebenen Polyester in einem mehrstufigen Verfahren durchzuführen. Es werden dazu in Gegenwart von Katalysatoren, beispielsweise Zinkacetat, phosphorige Säure, Antimon(III)oxid, Blei(II)oxid, Dibutylzinnoxid, zunächst die gesamten hydroxyfunktionellen Komponenten mit den monomeren Sulfoverbindungen und gegebenenfalls mit einem Teil der carbonsäurehaltigen Komponenten umgesetzt, so daß bei der Kondensation 95 % des für einen quantitativen Umsatz berechneten Kondensationswassers abdestilliert werden kann. Anschließend kommen gegebenenfalls die restlichen Carbonsäurekomponenten zur Reaktion, wobei die Kondensation bis zum gewünschten Gehalt an Carbonsäureäquivalenten fortgesetzt wird.

Werden Di- oder Polycarbonsäureanhydride zum Einführen der anionischen Gruppen verwendet, so wird ein OH-funktioneller Polyester mit dem Anhydrid zum Halbester umgesetzt und anschließend bis zur gewünschten Säurezahl weiterkondensiert.

Die Cokondensation findet bei Temperaturen zwischen 140°C und 240°C, bevorzugt zwischen 160°C und 220°C, statt. Zur Vermeidung von Glykolverlusten erfolgt die Destillation des Kondensates über eine Destillationskolonne. Als Katalysatoren kommen bevorzugt Organometallverbindungen, insbesondere zink-, zinn- oder titanhaltige Verbindungen, wie z.B. Zinkacetat, Dibutylzinnoxid oder Tetrabutyltitanat, in Betracht. Die Menge an Katalysator beträgt bevorzugt 0,1 bis 1,5 Gew.-% der Menge des Gesamtansatzes.

Die Säuregruppen können bereits in neutralisierter Form über die Einzelkomponenten in den Polyester eingeführt werden. Liegen freie Säuregruppen im Polyester vor, so kann gegebenenfalls deren Neutralisation mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak durchgeführt werden.

Die Isolierung des Polyesters kann in Substanz erfolgen, es kann jedoch auch eine 50 bis 95 gew.-%ige Lösung mit einem wassermischbaren, organischen Lösemittel hergestellt werden. In Frage kommen hierfür bevorzugt sauerstoffhaltige Lösemittel wie Alkohole, Ketone, Ester, Ether, beispielsweise Ethanol, n-Propanol, iso-Propanol, iso-Butanol, Butylacetat und Butylglykol, oder stickstoffhaltige Lösemittel wie z.B. N-Methylpyrrolidon. Die Viskosität dieser Lösungen liegt bei 60°C bevorzugt zwischen 0,5 und 40 Pa.s. Diese Lösung wird dann zur Herstellung einer Polyesterdispersion verwendet, in der 15 bis 65 Gew.-% Polyester, 0 bis 30 Gew.-% organische Lösemittel und 35 bis 85 Gew.-% Wasser vorliegen. Der resultierende pH-Wert beträgt 2 bis 8,5, bevorzugt 4 bis 8.

Die Herstellung der kationischen Komponenten der Formeln (1) bis (8) ist literaturbekannt. Die Herstellung der Verbindungen der Formel (1) ist in DE-A-41 42 541, die der Formel (2) in DE-A-40 29 652, die der -$SO_2$-verbrückten homo- oder copolymeren Morpholinium- oder Pyridinium-Kationen in der deutschen Patentanmeldung 43 02 644, die der Formeln (3) und (4) in DE-A-39 36 146 (US-PS-5 053 537) und die der Formeln (5) bis (8) in DE-A-39 12 395 (US-PS 5 055 619) beschrieben.

Die Herstellung der erfindungsgemäßen Polymersalze erfolgt, indem man die vorstehend beschriebene Polyesterdispersion oder eine saure, basische oder neutrale wäßrige Lösung des Polyesters, wobei diese wäßrige Lösung gegebenenfalls bis zu 15 Gew.-%, bevorzugt bis zu 10 Gew.-%, organisches Lösemittel enthält, vorzugsweise Alkohole wie z.B. Butanol, mit einer sauren, basischen oder neutralen wäßrigen Lösung der gewünschten kationischen Komponente umsetzt.

Der bei der Umsetzung stattfindende Ionenaustausch kann sowohl Protonen als auch gegebenenfalls einwertige Gegenionen am Polyester, wie z.B. Natriumionen, umfassen.

Die oben beschriebene Herstellung der Polymersalze kann gegebenenfalls auch in organischen Lösungsmitteln, bevorzugt in mit Wasser mischbaren organischen Lösungsmitteln, wie z.B. Dimethylformamid (DMF), Aceton, Dimethylsulfoxid (DMSO), Butylglykol und den oben beschriebenen Alkoholen, geschehen. Die organischen Lösungsmittel können auch als Gemisch, gegebenenfalls auch wie oben angeführt in Mischung mit Wasser, eingesetzt werden. Das Reaktionsprodukt fällt üblicherweise aus dem Reaktionsmedium als Niederschlag aus, wobei gegebenenfalls das Lösungsmittel eingeengt und/oder abgekühlt werden muß, oder das Reaktionsmedium zur Beschleunigung der Reaktion erhitzt werden muß, höchstens jedoch bis zum Siedepunkt des Lösungsmittels.

Die Reinigung der Polymersalze geschieht durch mehrmaliges Auswaschen mit ausreichend Wasser. Auf nicht umgesetztes Polymer wird durch Zugabe von Salzsäure (ca 2n) geprüft, eventuell nicht umgesetzte Metallkationen werden durch Basenzugabe oder durch einschlägig bekannte Reagenzien detektiert, überschüssige Ammonium-, Immonium- oder Phosphoniumkationen werden durch wäßrige Natriumtetraphenylborat-Lösung nachgewiesen. Für den Fall, daß eine nicht umgesetzte Komponente nachgewiesen werden kann, wird so lange weitergewaschen, bis diese Komponente nicht mehr nachweisbar ist.

Die Trocknung erfolgt im Umluftofen unter Vakuum bis zur Gewichtskonstanz. Typische Trockenbedingungen sind 60 bis 120°C, über 12 bis 48 h bei einem Vakuum von 100 bis 600 mbar.

Die Erfindung betrifft auch die vorstehend beschriebenen Polymersalze an sich, mit Ausnahme derjenigen, deren kationische Komponente Wasserstoff ist.

Die erfindungsgemäßen Verbindungen sind farblos und besitzen besonders hohe und konstante Ladungssteuereigenschaften, gute Thermostabilitäten und sehr gute Dispergierbarkeiten.

Ein großer technischer Vorteil dieser sehr gut dispergierbaren Verbindungen liegt darin, daß sie sich gegenüber den unterschiedlichen Bindemittelsystemen inert verhalten und somit vielfältig einsetzbar sind. Neben ihrer Eignung in Tonern sind sie als Ladungssteuermittel und Ladungsverbesserer auch in Pulvern und Lacken, insbesondere Pulverlacken, gut geeignet, insbesondere da sie die Gelzeit bei der thermischen Vernetzung der Pulverlacke ("Einbrennen") nicht nachteilig beeinflussen (beschleunigen).

Bei den erfindungsgemäßen Verbindungen sind die wenig aufwendige Synthese, die kostengünstige Herstellung, die hohe Wirksamkeit, die ausgezeichnete Thermostabilität und die allgemeine Harzverträglichkeit von ganz besonderem Vorteil. Für den technischen Einsatz besonders wichtig ist die sehr gute Dispergierbarkeit, so daß insgesamt eine hohe Effizienz erzielt werden kann.

So kann z.B. in Testtonern gezeigt werden, daß die Zugabe von 1 Gew.-% der erfindungsgemäßen Verbindungen die triboelektrische Aufladbarkeit in kleinsten Schritten dirigieren kann.

So zeigt z.B. ein Testtoner mit 1 Gew.-% des Ca-Salzes des Polyesters 1 eine konstante negative Aufladung (Anwendungsbeispiel 5), während ein Testtoner mit 1 Gew.-% eines Ammoniumsalzes des Polyesters 4 eine positive Aufladbarkeit besitzt (Anwendungsbeispiel 8). Der Ladungssteuereffekt wird um so deutlicher, wenn im Vergleich dazu die wenig schnelle und wenig konstante Aufladbarkeit des reinen Tonerbindemittels betrachtet wird. (Vergleichsbeispiel).

Ebenso läßt sich in Pulverlackbindemitteln die deutliche Aufladbarkeitsverbesserung und die damit einhergehende höhere Abscheidequote sehr deutlich erkennen. Während das reine Pulverlackbindemittel so gut wie keine Aufladbarkeit (0,1 µA) und damit einhergehend eine sehr geringe Abscheidequote (5 %) aufweist (Vergleichsbeispiel) läßt sich durch Zugabe von 1 Gew.-% des Ca-Salzes von Polyester 3 die Aufladbarkeit auf 0,9 µA und die Abscheidequote auf 70 % verbessern (Anwendungsbeispiel 15). Die Übertragbarkeit dieser Ergebnisse auf ein Polyester-Epoxid-Hybridpulverlacksystem ist in Anwendungsbeispiel 16 und dem dazugehörigen Vergleichsbeispiel gezeigt.

Die erfindungsgemäßen Polyestersalze sind auch für den Einsatz in Elektretmaterialien geeignet, wie in Anwendungsbeispiel 21 gezeigt.

Die erfindungsgemäß verwendeten Verbindungen werden einzeln oder in Kombination miteinander in einer Konzentration von 0,01 bis 50 Gewichtsprozent, vorzugsweise von 0,1 bis 5,0 Gewichtsprozent, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, eingearbeitet. Dabei können die erfindungsgemäß eingesetzten Verbindungen als getrocknete und gemahlene Pulver, Dispersionen oder Lösungen, Preßkuchen, Masterbatch, als auf geeignete Träger, wie z.B. Kieselgel, $TiO_2$, $Al_2O_3$, aus wäßriger oder nichtwäßriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensation.

Bei elektrostatischen Trennvorgängen von Polymeren und insbesondere von (Salz-)Mineralien können die Ladungssteuermittel auch in den oben angegebenen Mengen extern, d.h. auf die Oberfläche des zu trennenden Gutes, aufgegeben werden.

Die Höhe der elektrostatischen Aufladung der elektrophotographischen Toner oder der Pulverlacke, in welche die erfindungsgemäßen Ladungssteuermittel homogen eingearbeitet werden, wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Meßstand die elektrostatische Aufladung gemessen (J.H. Dessauer, H.E. Clark, "Xerography and related Processes", Focal Press, N.Y., 1965, Seite 289; J.F. Hughes, "Electrostatic Powder Coating", Research Studies Press Ltd. Letchworth, Hertfordshire, England, 1984, Chapter 2). Bei der Bestimmung des q/m-Wertes oder der Triboaufladung von Pulverlacken ist die Teilchengröße von großem Einfluß, weshalb bei den durch Sichtung erhaltenen Toner- oder Pulverlackproben streng auf einheitliche Teilchengrößenverteilung geachtet wird. So wird für Toner eine mittlere Teilchengröße von 10 µm angestrebt, während für Pulverlacke eine mittlere Teilchengröße von 50 µm praktikabel ist.

Die Triboversprühung der Pulver(lacke) wird mit einem Sprühgerät mit einem Normsprührohr und einer Sterninnenstange bei maximalem Pulverdurchsatz mit einem Sprühdruck von 3 bar durchgeführt. Der zu besprühende Gegenstand wird hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wird anschließend mit einem "Meßgerät zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebende Stromstärke wird in µA angezeigt. Die Abscheidequote wird anschließend in % durch eine Differenzwiegung aus versprühtem und abgeschiedenem Pulverlack bestimmt.

Die nachstehenden Beispiele dienen zur Erläuterung der Erfindung, ohne diese darauf zu beschränken. Die Angabe "Min." bedeutet "Minuten" und "Std." bedeutet "Stunden". Die Säurezahlen (SZ) wurden gemäß DIN 53 402 bestimmt, die Hydroxyzahlen (OHZ) gemäß DIN 53 783/53 240.

Die Differentialthermoanalysenmessungen (DTA) wurden an einem DSC 12E Gerät, Fa. Mettler, mit einer Heizrate von 3°C/min. durchgeführt.

1. Herstellungsbeispiele

1.1 Anionische Polyesterkomponente

Die Durchführung der Polyestersynthese erfolgt in einem 4-Liter-Vierhalskolben mit aufgesetzter Füllkörperkolonne (Kolonnenrohr: 30 mm Durchmesser, 2000 mm Länge; Füllkörper: Glasringe mit 6 mm Durchmesser und 6 mm Länge) und absteigender Destillationsbrücke, mit Temperaturfühlung des Reaktionsgutes unter Schutzgasatmosphäre (Schutzgaszufuhr, Stickstoff). Werden niedrigsiedende Alkohole, insbesondere Methanol als Kondensat abdestilliert, ist die Vorlage mit einem Eisbad zu kühlen.

1.1.1 Polyester 1

Stufe 1:

450 g Neopentylglykol, 370 g Propylenglykol und 300 g Ethylenglykol werden aufgeschmolzen, 135 g 5-Sulfoisophthalsäuredimethylester-Na-Salz und 3,0 g Zinkacetat zugegeben, aufgeheizt, so daß die Temperatur am Kolonnenkopf 65°C nicht überschreitet, und bei etwa 190°C kondensiert, bis 29 g Kondensat als Destillat erhalten werden.

Stufe 2:

Es wird auf 140°C abgekühlt, 970 g Terephthalsäure und 930 g Isophthalsäure zugegeben und aufgeheizt, so daß die Temperatur am Kolonnenkopf 100°C nicht überschreitet, bei einer Temperatur bis 240°C kondensiert, bis 410 g Destillat erhalten werden und ein Gehalt an freien Carboxylgruppen von 15 Millimol COOH/100 g erreicht ist.
Nach Abkühlung ist der erstarrte Rückstand das gewünschte Produkt.

Farbe: Hell
SZ: 14,2
mittleres Molekulargewicht: ca 3000 (Gelpermeationschromatographie ≙ GPC)
DTA: Scharfer exothermer Peak, Beginn 360°C, Maximum bei 375°C

Elementaranalyse:

Stickstoffgehalt < 0,01 Gew.-%

1.1.2 Polyester 2

Stufe 1:

580 g Neopentylglykol, 50 g Trimethylolpropan und 560 g Ethylenglykol werden aufgeschmolzen, 120 g 5-Sulfoisophthalsäure-Na-Salz und 3,0 g Zinkacetat zugegeben, aufgeheizt, so daß die Temperatur am Kolonnenkopf 100°C nicht überschreitet, und bei etwa 190°C kondensiert, bis 16 g Kondensat als Destillat erhalten werden.

Stufe 2:

Es wird auf 140°C abgekühlt, 1040 g Terephthalsäure und 870 g Isophthalsäure zugegeben und aufgeheizt, so daß die Temperatur am Kolonnenkopf 100°C nicht überschreitet, bei einer Temperatur bis 240°C kondensiert, bis 414 g Destillat erhalten werden und ein Gehalt an freien Carboxylgruppen von 25 Millimol COOH/100 g erreicht ist.
Nach Abkühlung ist der erstarrte Rückstand das gewünschte Produkt.

Farbe: Hell
SZ: 19

1.1.3 Polyester 3

500 g Neopentylglykol und 160 g Ethylenglykol werden aufgeschmolzen, 300 g 5-Sulfoisophthalsäure-Na-Salz, 600 g Terephthalsäure, 200 g Isophthalsäure und 3,0 g Zinkacetat zugegeben, aufgeheizt, so daß die Temperatur am Kolonnenkopf 100°C nicht überschreitet, und bei einer Temperatur bis 240°C und einem Vakuum von 50 mbar kondensiert, bis 214 g Destillat erhalten werden und ein Gehalt an freien Carboxylgruppen von 50 Millimol COOH/100 g erreicht ist.
Nach Abkühlung ist der erstarrte Rückstand das gewünschte Produkt.

Farbe: Hell
SZ: 77

1.1.4 Polyester 4

Stufe 1:

500 g Neopentylglykol und 150 g Ethylenglykol werden aufgeschmolzen, 100 g 5-Sulfoisophthalsäure-Na-Salz, 600 g Terephthalsäure, 250 g Isophthalsäure und 3,0 g Zinkacetat zugegeben, aufgeheizt, so daß die Temperatur am Kolonnenkopf 100°C nicht überschreitet, und bei einer Temperatur bis 240°C kondensiert, bis 195 g Destillat erhalten werden und ein Gehalt an freien Carboxylgruppen von etwa 10 Millimol COOH/100 g erreicht ist.

Stufe 2:

Der Ansatz wird auf 120°C abgekühlt, 300 g Trimellitsäureanhydrid zugegeben und die Temperatur langsam auf 160°C erhöht. Nach 3 Stunden und einem Gehalt an freien Carboxylgruppen von etwa 190 Millimol COOH/100 g wird der Ansatz entleert.
Nach Abkühlung ist der erstarrte Rückstand das gewünschte Produkt

Farbe: Hell
SZ: 110
mittleres Molekulargewicht: < 1000 (GPC)
DTA: scharfer exothermer Peak, Beginn bei 340°C, Maximum bei 350°C

Die Polyester können in die wäßrige Phase überführt werden, indem sie in einem wassermischbaren Lösemittel, wie z.B. Butylglykol, Butyldiglykol, N-Methylpyrrolidon, Methoxypropanol oder Aceton, bei erhöhter Temperatur angequollen und dann mit der gewünschten Menge Wasser versetzt werden. Polyesterharze mit einer Sulfonsäurezahl größer als 15 können direkt in warmem Wasser, das gegebenenfalls einen pH-Wert > 7 hat, gelöst werden.

Elementaranalyse

Stickstoffgehalt: 0.01 Gew.-% (nach Kjeldahl)
Chloridgehalt: <0,3 Gew.-%
Natriumgehalt: 0,5 Gew.-%

1.1.5 Polyester 5

Stufe 1:

720 g Neopentylglykol und 420 g Ethylenglykol werden aufgeschmolzen, 90 g 5-Sulfoisophthalsäuredimethylester-Na-Salz und 3 g Zinkacetat zugegeben, aufgeheizt, so daß die Temperatur am Kolonnenkopf 65°C nicht überschreitet, und bei etwa 190°C kondensiert, bis 21 g Destillat erhalten werden.

Stufe 2:

Der Ansatz wird auf 140°C abgekühlt, 900 g Terephthalsäure und 1020 g Isophthalsäure zugegeben und aufgeheizt, so daß die Temperatur am Kolonnenkopf 100°C nicht überschreitet, bei Temperaturen bis ca. 240°C und einem Vakuum von 10 mbar kondensiert, bis 410 g Destillat erhalten werden und ein Gehalt an freien Carboxylgruppen von 6 Millimol COOH/100 g und ein Gehalt an OH-Gruppen von ca. 40 Millimol OH/100 g erreicht ist.

Elementaranalyse

Calciumgehalt: 0,001 Gew.-%
Natriumgehalt: 0,24 Gew.-%

Stickstoffgehalt: 0,01 Gew.-% nach Kjeldahl

1.2 Polymersalze

1.2.1 Salze des Polyesters 1 aus Herstellungsbeispiel 1.1.1

1.2.1.1 Poly(diallyldimethylammonium)salz

20 g des Polyesters 1 werden in 200 ml Dimethylformamid (DMF) gelöst und 250 ml Eiswasser rasch zugegeben (milchige Trübung).
1,8 g Poly(diallyldimethylammonium)chlorid (mittleres Molgewicht 110 000 bis 130 000) werden in Form einer 40 gew.-%igen Lösung mit weiteren 75 ml $H_2O$ verdünnt und zur Vorlage zugetropft. Das Produkt fällt sofort aus und wird weitergerührt. Anschließend wird das Produkt mit Wasser ammoniumfrei gewaschen und über Nacht im Vakuum bei 60°C getrocknet.

Ausbeute: 20 g weißes Pulver
N-Gehalt: 3,5 Gew.-%

1.2.1.2 Calciumsalz

20 g des Polyesters 1 werden in 200 ml DMF gelöst, 250 ml $H_2O$ werden rasch hinzugegeben. 2,5 g 84 gew.-%iges $CaCl_2$ (Riedel-de-Haen, No. 31216) in 100 ml $H_2O$ werden zugetropft, 2 Stunden wird bei 60°C nachgerührt. Der Niederschlag wird abgenutscht, mit Wasser Calcium-frei gewaschen und über Nacht bei 60°C im Vakuum getrocknet.

Ausbeute: 18,3 g eines weißen Pulvers
Calcium-Gehalt: 0,26 Gew.-%

1.2.1.3 Chromsalz

62,5 g einer 32 gew.-%igen Suspension des Polyesters 1 (Suspensionsmedium Wasser mit 8 Gew.-% Butylglykol) werden mit 400 g Eiswasser verdünnt. 1,5 g $CrCl_3$ x 6 $H_2O$ werden in 200 ml $H_2O$ gelöst und bei 10°C über 30 min zugetropft. Der feine weiß-grünliche Niederschlag wird abgenutscht, gewaschen und über Nacht bei 100°C im Vakuum getrocknet.

Ausbeute: 18,5 g weiß-grünliches Pulver
Glührückstand bei 800°C (bei 2 Stunden): 0,46 Gew.-%

1.2.1.4 Aluminiumsalz

62,5 g einer 32 gew.-%igen Suspension des Polyesters 1 (Suspensionsmedium Wasser mit 8 Gew.-% Butylglykol) werden mit 400 g Eiswasser verdünnt. 3,4 g $Al_2(SO_4)_3$ x 18 $H_2O$ werden in 200 ml $H_2O$ gelöst und mit Soda auf pH ca. 7 gestellt und bei 10°C zugetropft. Über Nacht rühren, den hellen Niederschlag abnutschen, waschen und über Nacht bei 100°C im Vakuum trocknen.

Ausbeute: 16,8 g eines hellen Pulvers.

1.2.1.5 Guanidiniumsalz

2,6 g ®Dodigen 181-1 conc., Hoechst AG, (78 Gew.-% von $[R\text{-}NH(CH_2)_3\text{-}NH\text{-}C(NH_2) = NH]^{\oplus}[Acetat]^{\ominus}$ in wäßrigem Medium, R = Cocosalkyl) werden in 800 ml $H_2O$ gegeben und auf 10°C gekühlt. 20 g Polyester 1 werden in 200 ml DMF gelöst und innerhalb 1 Stunde zur Vorlage zugetropft. Der weiße Niederschlag wird abgenutscht, mit viel Eiswasser gewaschen und im Vakuum bei 70°C über 48 Stunden getrocknet.

Ausbeute: 18,1 g weißes Pulver
Stickstoffgehalt: 0,7 Gew.-% nach Kjeldahl

1.2.2 Salze des Polyesters 3 aus Herstellungsbeispiel 1.1.3

1.2.2.1 Calciumsalz

20 g des Polyesters 3 werden in 500 ml $H_2O$ angerührt, mit 20 ml 2n Sodalösung auf ca. pH 8 gestellt und unter Erwärmen in Lösung gebracht. Es wird filtriert, anschließend wird eine bei 40°C heiß gesättigte $CaCl_2$-Lösung (170 g $CaCl_2$, 84 gew.-%ig, gekörnt, in 200 ml $H_2O$) zugetropft. Über Nacht stehen lassen (Raumtemperatur), den grobkristallinen Niederschlag absaugen, und mit kaltem $H_2O$ waschen, bis Waschwasser calciumfrei. Produkt im Vakuum über Nacht bei 60°C trocknen.

Ausbeute: 14,6 g eines weißen Pulvers

1.2.3 Salze des Polyesters 4 aus Herstellungsbeispiel 1.1.4

1.2.3.1 Poly(diallydimethylammonium)Salz

50 g des Polyesterharzes 4 werden in 1200 ml $H_2O$ (50°C), das zuvor mit 2 n Sodalösung auf pH ca. 8 gestellt wurde, gelöst, anschließend wird gekühlt. 69 g Poly(diallydimethylammonium)chlorid (mittleres Molgewicht 100 000 - 130 000) werden in Form einer 40 gew.-%igen wäßrigen Lösung zugetropft, 4 Stunden wird nachgerührt. Der Niederschlag wird abgesaugt, mit Wasser gewaschen, abnutscht und über Nacht bei 70°C im Vakuum getrocknet.

Ausbeute: 47 g helles Pulver
Stickstoffgehalt: 0,37 Gew.-% (nach Kjeldahl)

1.2.3.2 Kokosfettsäurealkyldimethylbenzylammoniumsalz

10 g des Polyesters 4 werden in 250 ml $H_2O$, das zuvor mit 2n Sodalösung auf pH 8 gestellt wurde, gelöst. 22 g einer 50 gew.-%igen Kokosfettsäurealkyldimethyl-benzylammonium(KDBA)chlorid-Lösung werden auf 100 ml verdünnt und unter Rühren der Polyesterlösung zugetropft. 4 Stunden bei 50°C nachrühren. Produkt fällt als hellschmieriger Bodensatz aus. Das viskose Produkt wird abdekantiert und bei 60°C bei 48 Std im Vakuum getrocknet.

Ausbeute: 13,2 g, viskoses helles Produkt.

1.2.3.3. Ditalgmethylhydroxypropylammonium-Salz

10 g des Polyesters 4 werden in 250 ml $H_2O$ suspendiert und mit 2n Sodalösung auf pH 8 gestellt (gelöst). 22,1 g einer 75 Gew.-% wäßrigen Lösung von Ditalgmethylhydroxypropyl-ammonium(DTHPA)chlorid werden auf 100 ml mit $H_2O$ verdünnt und unter Rühren der Polyesterlösung zugetropft;
4 Stunden wird bei 50°C nachgerührt. Ein helles viskoses Produkt fällt aus. Das viskose Produkt wird abdekantiert und bei 60°C über 48 Std im Vakuum getrocknet.

Ausbeute: 11,7 g viskoses, gelbliches Produkt.

1.2.3.4 Aluminium-Salz

20 g des Polyesters 4 werden in ca 500 ml $H_2O$, das zuvor mit Soda auf pH 8 gestellt wurde, gelöst.
15 g $Al_2(SO_4)_3$ x 18 $H_2O$ werden in 200 ml $H_2O$ gelöst und bei 10°C der Polyesterlösung unter Rühren zugetropft. Es bildet sich ein weißer Niederschlag. Der Niederschlag wird abgenutscht, gewaschen und über 24 Std bei 100°C im Vakuum getrocknet, bis zur Gewichtskonstanz.

Ausbeute: 22,4 g weißes Pulver
SZ: 19
Glührückstand (800°C, 2 Std): 6,2 Gew.-%

1.2.3.5 Eisen-Salz

20 g des Polyesters 4 werden in 500 ml $H_2O$, das zuvor mit Sodalösung auf pH 7,5 gestellt wurde, gelöst.
5,5 g $FeSO_4$ werden in 250 ml $H_2O$ gelöst und unter Rühren der Polyesterlösung bei 10°C zugetropft. Anschließend

kurz (5 min) auf ca. 70°C erwärmen, es bildet sich ein brauner Niederschlag, der abgenutscht, gewaschen und bei 60°C über 48 Stunden im Vakuum getrocknet wird, bis zur Gewichtskonstanz.

Ausbeute: 18,3 g eines hellbraunen Pulvers
Glührückstand (800°C/2 Std): 11,4 Gew.-%

1.2.3.6 Zink-Salz

20 g des Polyesters 4 werden in 500 ml $H_2O$, das zuvor mit Soda auf pH 7,5 gestellt wurde, gelöst. 6,5 g Zinkacetat-2-hydrat werden in 300 ml $H_2O$ gelöst und über 30 min hinweg bei 10°C der Polyesterlösung zugetropft. Es fällt ein feiner, zäher Niederschlag aus. Kurz (5 min) auf 70°C erwärmen, Niederschlag wird grobkörniger. Den Niederschlag abnutschen, waschen und bis zur Gewichtskonstanz über 48 Std bei 60°C im Vakuum trocknen.

Ausbeute: 18,6 g helles Pulver
Glührückstand (800°C/2 Std): 10,2 Gew.-%
DTA: Exothermer Peak, Beginn bei 305°C, Maximum bei 365°C.

1.2.3.7 Perfluorammonium-Salz

220 ml einer 35 Gew-% wäßrigen Lösung von $[(CH_3)(C_2H_5)_2N(CH_2\text{-}CH{=}CF\text{-}(CF_2\text{-}CF_2)_nCF_3]^{(+)}[CH_3O\text{-}SO_3]^{(-)}$, wobei n = 2 bis 5, (N-1,1,2-Trihydroperfluoroalken-2-yl)-N,N-diethyl-N-methylammoniummonomethylsulfat), F-Quat genannt, werden auf 400 ml mit $H_2O$ verdünnt und mit Soda auf pH 7 gestellt.
Diese Lösung wird einer Lösung von 60 g Polyester 4 in 1500 ml $H_2O$, die mit Soda auf pH 7 gestellt wurde, zugetropft. Ein anfangs weißer, später viskoser, gelblicher Niederschlag fällt aus. Gut waschen, abdekantieren, in Aceton lösen und anschließend durch Einengen das Produkt aus Aceton erhalten.

Ausbeute: 98 g eines viskosen, gelblichen Produktes
Stickstoff: 1,2 Gew.-% nach Kjeldahl.

1.2.3.8 Perfluorammonium-Salz

73 g des im Herstellungsbeispiel 1.2.3.7 beschriebenen F-Quats werden in 700 ml $H_2O$ gelöst und mit Soda auf pH 7 gestellt.
Eine Lösung von 20 g Polyester 4 in 200 ml DMF wird bei 10°C unter Rühren innerhalb von 1 Stunde der F-Quat-Lösung zugetropft.
Der grauweiße Niederschlag wird abgenutscht, mit viel Wasser gewaschen und über 24 Stunden bei 60°C im Vakuum bis zur Gewichtskonstanz getrocknet.

Ausbeute: 28,7 g eines weißgrauen Pulvers
SZ: 100
Stickstoff: 1,0 Gew.-% (Kjeldahl)
DTA: Scharfer exothermer Zersetzungspeak, Beginn bei 315°C, Maximum bei 365°C

1.2.3.9 Poly(diallyldimethylammonium)-Salz

7 g des im Herstellungsbeispiel 1.2.3.1 beschriebenen Poly(diallyldimethylammonium)chlorids werden in 700 ml $H_2O$ gelöst.
Dieser Lösung werden unter gutem Rühren bei 10°C 20 g des Polyesters 4, gelöst in 200 ml DMF, zugetropft. Der weiße Niederschlag wird sofort abgesaugt, gewaschen und über 24 Stunden bei 60°C im Vakuum bis zur Gewichtskonstanz getrocknet.

Ausbeute: 9,6 g eines weißen Pulvers
SZ: 68
Stickstoff: 0,5 Gew.-% nach Kjeldahl

1.2.3.10 Diallyldimethylammonium-Salz

6,5 g Diallyldimethylammoniumchlorid werden in 700 ml $H_2O$ gelöst.

Dieser Lösung werden unter gutem Rühren bei 10°C 20 g des Polyesters 4, gelöst in 200 ml DMF, innerhalb von einer Stunde zugetropft. Der weiße Niederschlag wird abgesaugt, gewaschen und bei 60°C im Vakuum über 24 Std bis zur Gewichtskonstanz getrocknet.

Ausbeute: 14 g eines weißen Pulvers.

1.2.3.11 Guanidiniumsalz

19 g (R)Dodigen 181-1 conc. (Hoechst AG) (78 % Gew. von $[R\text{-}NH(CH_2)_3\text{-}NH_2\text{-}C(NH_2) = NH]^{(+)}[\text{Acetat}]^{(-)}$ in wäßrigem Medium, R = Cocosalkyl) werden in 800 ml $H_2O$ gegeben und auf 10°C gekühlt.
20 g Polyester 4 werden in 200 ml DMF gelöst und innerhalb 1 Std zugetropft. Der weiße Niederschlag wird abgenutscht, gewaschen (mit viel Eiswasser) und im Vakuum bei 70°C über 48 Std getrocknet.

Ausbeute: 18,7 g weißes Pulver
Stickstoff: 5,5 Gew.-% nach Kjeldahl

1.2.4 Ca-Salz des Polyesters 5

90 g Calciumchlorid werden in 2000 ml Wasser bei 15°C bis 30°C, bevorzugt Raumtemperatur, gelöst. 2250 g einer 32 gew.-%igen Suspension des Polyesters 5 (Suspensionsmedium: Wasser mit 5 Gew.-% Butylglykol) werden innerhalb von 40 min bei 15 bis 30°C, bevorzugt 25 bis 28°C, zu der $CaCl_2$-Lösung unter Rühren hinzugegeben.
Ein farbloser Niederschlag fällt aus, und es wird 0,5 bis 2 Std., bevorzugt 1 Std., bei 15 bis 30°C, bevorzugt 26°C, nachgerührt (Prüfung auf Calcium-Überschuß mit Oxalsäure). Anschließend wird der Niederschlag auf einer Nutsche abgesaugt, mit 2 Liter Wasser portionsweise salz- und butylglykolfrei gewaschen, bis die Leitfähigkeit kleiner als 1 mS/cm ist.
Das Produkt wird bei 60°C im Vakuum über 48 Std. getrocknet.
Zur Feststoffisolierung bietet sich alternativ die Sprühtrocknung der Suspension an.

Ausbeute: 683 g eines hellen Pulvers
Calciumgehalt: 0,26 Gew.-%
Natriumgehalt: 0,01 Gew.-%
Restwassergehalt: 0,3 Gew.-%
DTA: Scharfer exothermer Peak, Beginn bei 320°C, Maximum bei 340°C.
Spezifischer Widerstand: $10^{16}$ Ohm • cm
ε: 2,8 - 3,5; tan delta: 1-5 • $10^{-2}$

2. Anwendungsbeispiele

Anwendungsbeispiel 1

1,0 Teile der Verbindung aus Herstellungsbeispiel 1.1.1 (Polyester 1) werden mittels eines Kneters 45 min in 99,0 Teile eines Tonerbindemittels (Styrol-Methacrylat-Copolymer 60:40) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Styrol-Methacrylat-Copolymer 90:10 beschichteten Magnetit-Teilchen derGröße 50 bis 200 µm besteht. (90 µm Xerographic Carrier, Plasma Materials Inc., USA).
Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei 50 % relativer Luftfeuchte. In Abhängigkeit von der Aktivierdauer werden folgende q/m-Werte [µC/g] gemessen:

| Aktivierdauer | Aufladung q/m [µC/g] |
|---|---|
| 10 Min | - 5 |
| 30 Min | - 11 |
| 2 Std | - 27 |

(fortgesetzt)

| Aktivierdauer | Aufladung q/m [µC/g] |
|---|---|
| 24 Std | -50 |

Anwendungsbeispiel 2

1,0 Teile der Verbindung aus Herstellungsbeispiel 1.1.3 (Polyester 3) werden, wie in Anwendungsbeispiel 1 beschrieben, eingearbeitet und vermessen.

| Aktivierdauer | Aufladung [µC/g] |
|---|---|
| 10 Min | - 5 |
| 30 Min | - 12 |
| 2 Std | - 23 |
| 24 Std | - 34 |

Anwendungsbeispiel 3

1,0 Teile der Verbindung aus Herstellungsbeispiel 1.1.4 (Polyester 4) werden, wie in Anwendungsbeispiel 1 beschrieben, eingearbeitet und vermessen.

| Aktivierdauer | Aufladung [µC/g] |
|---|---|
| 10 Min | - 6 |
| 30 Min | - 13 |
| 2 Std | - 23 |
| 24 Std | - 26 |

Anwendungsbeispiel 4

1,0 Teile der Verbindung aus Herstellungsbeispiel 1.2.1.1 (Poly[diallyldimethylammonium]salz von Polyester 1) werden, wie in Anwendungsbeispiel 1 beschrieben, eingearbeitet und vermessen.

| Aktivierdauer | Aufladung [µC/g] |
|---|---|
| 10 Min | - 4 |
| 30 Min | - 8 |
| 2 Std | - 16 |
| 24 Std | - 36 |

Anwendungsbeispiel 5

1,0 Teile der Verbindung aus Herstellungsbeispiel 1.2.1.2 (Calciumsalz von Polyester 1) werden, wie in Anwendungsbeispiel 1 beschrieben, eingearbeitet und vermessen.

| Aktivierdauer | Aufladung [µC/g] |
|---|---|
| 10 Min | - 14 |
| 30 Min | - 14 |
| 2 Std | - 16 |
| 24 Std | - 12 |

Anwendungsbeispiel 6

1,0 Teile der Verbindung aus Herstellungsbeispiel 1.2.1.3 (Chromsalz von Polyester 1) werden, wie in Anwendungsbeispiel 1 beschrieben, eingearbeitet und vermessen.

| Aktivierdauer | Aufladung [µC/g] |
|---|---|
| 10 Min | - 21 |
| 30 Min | - 23 |
| 2 Std | - 25 |
| 24 Std | - 29 |

Anwendungsbeispiel 7

1,0 Teile der Verbindung aus Herstellungsbeispiel 1.2.3.1 (Poly-(diallyldimethylammonium)salz von Polyester 4) werden, wie in Anwendungsbeispiel 1 beschrieben, eingearbeitet und vermessen.

| Aktivierdauer | Aufladung [µC/g] |
|---|---|
| 10 Min | - 5 |
| 30 Min | - 10 |
| 2 Std | - 17 |
| 24 Std | - 25 |

Anwendungsbeispiel 8

1,0 Teile der Verbindung aus Herstellungsbeispiel 1.2.3.3 [Ditalgmethylhydroxypropylammoniumsalz von Polyester 4) werden wie in Anwendungsbeispiel 1 beschrieben, eingearbeitet und vermessen.

| Aktivierdauer | Aufladung [µC/g] |
|---|---|
| 10 Min | + 6 |
| 30 Min | + 7 |
| 2 Std | + 7 |

(fortgesetzt)

| Aktivierdauer | Aufladung [µC/g] |
|---|---|
| 24 Std | + 5 |

Anwendungsbeispiel 9

1,0 Teile der Verbindung aus Herstellungsbeispiel 1.2.3.4 (Aluminiumsalz von Polyester 4) werden, wie in Anwendungsbeispiel 1 beschrieben, eingearbeitet und vermessen.

| Aktivierdauer | Aufladung [µC/g] |
|---|---|
| 10 Min | - 8 |
| 30 Min | - 9 |
| 2 Std | - 17 |
| 24 Std | - 29 |

Anwendungsbeispiel 10

1,0 Teile der Verbindung aus Herstellungsbeispiel 1.2.3.8 (Perfluorammoniumsalz von Polyester 4) werden, wie in Anwendungsbeispiel 1 beschrieben, eingearbeitet und vermessen.

| Aktivierdauer | Aufladung [µC/g] |
|---|---|
| 10 Min | - 11 |
| 30 Min | - 15 |
| 2 Std | - 21 |
| 24 Std | - 21 |

Anwendungsbeispiel 11

1,0 Teile der Verbindung aus Herstellungsbeispiel 1.2.3.9 (Poly(diallyldimethylammoniumsalz von Polyester 4) werden, wie in Anwendungsbeispiel 1 beschrieben, eingearbeitet und vermessen.

| Aktivierdauer | Aufladung [µC/g] |
|---|---|
| 10 Min | - 13 |
| 30 Min | - 20 |
| 2 Std | - 25 |
| 24 Std | - 25 |

Werden statt 1,0 Teilen 2,0 Teile der Verbindung aus Herstellungsbeispiel 1.2.3.9 eingearbeitet, so erhält man folgende Werte

| Aktivierdauer | Aufladung [µC/g] |
|---|---|
| 10 Min | - 8 |
| 30 Min | - 13 |
| 2 Std | - 20 |
| 24 Std | - 20 |

Vergleichsbeispiel 11

Zur Messung unter Verwendung des reinen Styrol-acrylat-Tonerbindemittels wird wie in Anwendungsbeispiel 1 verfahren, ohne jedoch Zusatzstoffe einzukneten.

| Aktivierdauer | Aufladung [µC/g] |
|---|---|
| 10 Min | - 4 |
| 30 Min | - 12 |
| 2 Std | - 27 |
| 24 Std | - 48 |

Anwendungsbeispiel 12

1 Teil der Verbindung aus Herstellungsbeispiel 1.1.1 (Polyester 1) wird, wie in Anwendungsbeispiel 1 beschrieben, in 99 Teile eines Pulverlackbindemittels auf Basis eines carboxylhaltigen Polyesterharzes $^{(R)}$Crylcoat 430 (UCB, Belgien) homogen eingearbeitet.

Zur Bestimmung der Abscheidequote werden 30 g des Test-Pulverlackes mit einem definierten Druck durch eine wie zuvor beschriebene Tribopistole versprüht. Durch Differenzwiegung läßt sich die abgeschiedene Pulverlackmenge bestimmen und eine Abscheidequote in % definieren sowie durch die Ladungsübertragung ein Stromfluß (µA) abgreifen.

| Druck [bar] | Strom [µA] | Abscheidequote [%] |
|---|---|---|
| 3 | 0,8 | 30 |

Anwendungsbeispiel 13

1,0 Teile der Verbindung aus Herstellungsbeispiel 1.1.4 (Polyester 4) werden, wie in Anwendungsbeispiel 12 beschrieben, eingearbeitet und vermessen

| Druck [bar] | Strom [µA] | Abscheidequote [%] |
|---|---|---|
| 3 | 0,7 | 30 |

Anwendungsbeispiel 14

1,0 Teile der Verbindung aus Herstellungsbeispiel 1.2.1.1 (Polydiallyldimethylammoniumsalz von Polyester

1) werden, wie in Anwendungsbeispiel 12 beschrieben, eingearbeitet und vermessen.

| Druck [bar] | Strom [µA] | Abscheidequote [%] |
|---|---|---|
| 3 | 0,8 | 35 |

Anwendungsbeispiel 15

1,0 Teile der Verbindung aus Herstellungsbeispiel 1.2.2.1 (Calciumsalz von Polyester 3) werden, wie in Anwendungsbeispiel 12 beschrieben, eingearbeitet und vermessen.

| Druck [bar] | Strom [µA] | Abscheidequote [%] |
|---|---|---|
| 3 | 1,2 | 70 |

Anwendungsbeispiel 16

Ein Pulverlack der Zusammensetzung

| | |
|---|---|
| (R)Alftalat AN 725 (Carboxylgruppenhaltiger Polyester, Hoechst AG) | 518 Teile |
| ®Araldit PT 810 (Epoxidharz, Ciba Geigy AG) | 38 Teile |
| Benzoin | 3 Teile |
| ®Additol XL 496 (Verlaufsmittel, Hoechst AG) | 30 Teile |
| ®Kronos 2160 (Titandioxid, Kronos Titan GmbH) | 300 Teile |
| ®Blanc Fixe F (Bariumsulfat, Sachtleben Chemie GmbH) | 100 Teile |
| Calciumsalz Polyester 3 (Herstellungsbeispiel 1.2.2.1) | 11 Teile |
| | 1000 Teile |

zeigt einen Ladestrom von 0,6 µA bei einer Abscheidewirkung (ISO 8130 Teil 9) von 42 %. Die Gelzeit (ISO 8130 Teil 6) beträgt bei 180°C 240 sec, der anschließende Glanz bei 60° Optik (DIN 67 530) 89 %, der Verlauf wird visuell mit 2-beurteilt.

Vergleichsbeispiel

Ein Pulverlack der Zusammensetzung

| | |
|---|---|
| Alftalat AN 725 | 527 Teile |
| Araldit PT 810 | 40 Teile |
| Benzoin | 3 Teile |
| Additol XL 496 | 30 Teile |
| Kronos 2160 | 300 Teile |
| Blanc Fixe F | 100 Teile |
| | 1000 Teile |

zeigt einen Ladestrom von 0,3 µA bei einer Abscheidewirkung von 28 %. Die Gelzeit beträgt bei 180°C 300 sec, der anschließende Glanz bei 60° Optik 92 %, der Verlauf wird visuell mit 2 beurteilt.

Anwendungsbeispiel 17

1,0 Teile der Verbindung aus Herstellungsbeispiel 1.2.1.4 (Aluminium-Salz von Polyester 1) werden, wie in Anwendungsbeispiel 1 beschrieben, eingearbeitet und vermessen.
Anstelle des Styrolacrylat-Copolymers wurde ein Polyesterharz auf Basis Bisphenol-A-Fumarat (®Atlac T 500, Atlas Chemicals, Belgien) eingesetzt, anstelle des Styrol-Methacrylat beschichteten Carriers wurde ein siliconbeschichteter Carrier verwendet (Typ FBM 96-110, Firma Powder Tech., Japan). In Abhängigkeit von der Aktivierdauer werden folgende q/m-Werte [µC/g] gemessen

| Aktivierdauer | Aufladung [µC/g] |
|---|---|
| 10 Min | - 12 |
| 30 Min | - 11 |
| 2 Std | - 11 |
| 24 Std | - 11 |

Anwendungsbeispiel 18

1,0 Teile der Verbindung aus Herstellungsbeispiel 1.2.1.1 (Poly(diallyldimethylammoniumsalz von Polyester 1) werden, wie in Anwendungsbeispiel 17 beschrieben, eingearbeitet und vermessen.

| Aktivierdauer | Aufladung [µC/g] |
|---|---|
| 10 Min | - 16 |
| 30 Min | - 16 |
| 2 Std | - 15 |
| 24 Std | - 15 |

Anwendungsbeispiel 19

1,0 Teile der Verbindung aus Herstellungsbeispiel 1.2.3.4 (Aluminiumsalz von Polyester 4) werden, wie in Anwendungsbeispiel 17 beschrieben, eingearbeitet und vermessen.

| Aktivierdauer | Aufladung [µC/g] |
|---|---|
| 10 Min | - 17 |
| 30 Min | - 18 |
| 2 Std | - 18 |
| 24 Std | - 16 |

Anwendungsbeispiel 20

1,0 Teile der Verbindung aus Herstellungsbeispiel 1.2.3.7 (Perfluorammoniumsalz von Polyester 4) werden,

wie in Anwendungsbeispiel 17 beschrieben, eingearbeitet und vermessen.

| Aktivierdauer | Aufladung [µC/g] |
|---|---|
| 10 Min | - 8 |
| 30 Min | - 9 |
| 2 Std | - 9 |
| 24 Std | - 7 |

Vergleichsbeispiel

Zur Messung unter Verwendung des reinen Polyester-Tonerbindemittels wird, wie in Anwendungsbeispiel 17 verfahren, ohne jedoch Zusatzstoffe einzukneten.

| Aktivierdauer | Aufladung [µC/g] |
|---|---|
| 10 Min | - 8 |
| 30 Min | - 6 |
| 2 Std | - 4 |
| 24 Std | - 2 |

Anwendungsbeispiel 21

5 g Polyethylenterephthalat (PET)-Granulat wurden in einen Erlenmeyer-Kolben gegeben, in dem zuvor eine Lösung aus 25 ml Trifluoressigsäure, 25 ml Methylenchlorid und 50 mg Ladungssteuermittel aus Herstellungsbeispiel 1.2.3.8 (Perfluorammoniumsalz von Polyester 4) angesetzt worden war. Das Gemisch wurde anschließend bei Raumtemperatur 60 Minuten gerührt, wodurch das PET vollständig aufgelöst wurde und eine zähflüssige, weißliche Lösung entstand. Diese wurde nun gleichmäßig auf eine leicht schräg liegende Glasplatte von 20 cm x 20 cm Größe gegossen und 10 Stunden im Abzug bei Raumtemperatur getrocknet. Nach dieser Zeit war das Lösungsmittel vollständig verdampft und eine leicht milchige PET-Schicht hatte sich auf der Glasplatte abgelagert. Um die Schicht ablösen zu können, wurde die Platte 30 Min. in eine mit Methanol gefüllte Schale gelegt. Nach dem Ablösen und Trocknen entstand eine PET-Folie, deren Dicke im mittleren Bereich der Glasplatte homogen 30 µm betrug.

Ein Folienstück von 8 cm Durchmesser wurde in einen ringförmigen Halter gespannt und mittels Korona-Aufladung auf 400 Volt aufgeladen. Zur Messung des Oberflächenpotentials wurde die Folie mit der einen Seite auf einen geerdeten Metallblock gelegt und durch das Eigengewicht des Halters gleichmäßig angedrückt. Auf der anderen Seite der Folie wurde das Oberflächenpotential mit Hilfe eines elektrostatischen Voltmeters (Monroe Electronics Inc., Modell 244) gemessen. Nach 30 Min. zeigte die Folie noch eine Restladung von 150 Volt.

Vergleichsbeispiel

In der oben beschriebenen Weise wurden PET-Folien mit und ohne Zusatz von Ladungssteuermittel aus Herstellungsbeispiel 1.2.3.8 hergestellt, in Halter gespannt und auf geerdete Metallblöcke gebracht. Um das triboelektrische Ladungsverhalten zu untersuchen, wurde jede Folie mittels ionisierter Luft zunächst entladen und anschließend die Oberfläche mit einer Gummiwalze gerieben. Während sich bei der unmodifizierten PET-Folie eine Aufladung von -50 Volt einstellte, zeigte die mit Ladungssteuermittel modifizierte Folie in der gleichen Prozedur eine Aufladung von -370 Volt.

Anwendungsbeispiel 22

1,0 Teile der Verbindung aus Herstellungsbeispiel 1.2.1.5 (Guanidiniumsalz von Polyester 1) werden, wie in

Anwendungsbeispiel 17 beschrieben, eingearbeitet und vermessen.

| Aktivierdauer | Aufladung [µC/g] |
|---|---|
| 10 Min | - 12 |
| 30 Min | - 13 |
| 2 Std | - 15 |
| 24 Std | - 14 |

Anwendungsbeispiel 23

1,0 Teile der Verbindung aus Herstellungsbeispiel 1.2.3.11 (Guanidiniumsalz von Polyester 4) werden, wie in Anwendungsbeispiel 17 beschrieben, eingearbeitet und vermessen.

| Aktivierdauer | Aufladung [µC/g] |
|---|---|
| 10 Min | - 11 |
| 30 Min | - 12 |
| 2 Std | - 12 |
| 24 Std | - 11 |

Anwendungsbeispiel 24

1,0 Teile der Verbindung aus Herstellungsbeispiel 1.2.4 (Calciumsalz des Polyesters 5) werden wie in Anwendungsbeispiel 1 beschrieben, eingearbeitet und vermessen:

| Aktivierdauer | Aufladung [µC/g] |
|---|---|
| 10 Min | - 13 |
| 30 Min | - 15 |
| 2 Std | - 15 |
| 24 Std | - 14 |

Anwendungsbeispiel 25

1,0 Teile der Verbindung aus Herstellungsbeispiel 1.2.4 (Calciumsalz des Polyesters 5) werden, wie in Anwendungsbeispiel 12 beschrieben, eingearbeitet und vermessen:

| Druck [bar] | Strom [µA] | Abscheidequote [%] |
|---|---|---|
| 3 | 0,8 | 35 % |

Vergleichsbeispiel

Zur Bestimmung der Abscheidequote des reinen Pulverlackbindemittels ®Crylcoat 430 wird wie in Anwendungsbeispiel 12 verfahren, ohne jedoch einen Zusatzstoff einzukneten.

| Druck [bar] | Strom [µA] | Abscheidequote [%] |
|---|---|---|
| 3 | 0,1 | 5 |

**Patentansprüche**

1. Verwendung von Polymersalzen, deren anionische Komponente ein Polyester ist, der aus dem Reaktionsprodukt der einzelnen Komponenten a), b) und c) sowie gegebenenfalls d) und gegebenenfalls e) besteht, wobei

   a) eine Dicarbonsäure oder ein reaktives Derivat einer Dicarbonsäure, welche frei von Sulfogruppen sind,
   b) eine difunktionelle aromatische, aliphatische oder cycloaliphatische Sulfoverbindung, deren funktionelle Gruppen Hydroxyl oder Carboxyl, oder Hydroxyl und Carboxyl, sind,
   c) ein aliphatisches, cycloaliphatisches oder aromatisches Diol, ein Polyetherdiol oder ein Polycarbonatdiol,
   d) eine polyfunktionelle Verbindung mit einer Funktionalität > 2, deren funktionelle Gruppen Hydroxyl oder Carboxyl, oder Hydroxyl und Carboxyl, sind und
   e) eine Monocarbonsäure ist

   und deren kationische Komponente Wasserstoffatome, Metallkationen, substituierte Ammonium-Kationen, Immonium-Kationen, Guanidinium-Kationen, oder ein Gemisch der genannten Kationen ist,
   als Ladungssteuermittel und Aufladungsverbesserer in elektrophotographischen Tonern und Entwicklern, in triboelektrisch oder elektrokinetisch versprühbaren Pulvern und Pulverlacken sowie in Elektretmaterialien, wobei in besagten Pulvern und Pulverlacken sowie in Elektretmaterialien die kationische Komponente auch Phosphonium-, Arsonium- oder Stibonium-Kationen sein können.

2. Verwendung nach Anspruch 1, dadurch gekennzeichnet, daß die Komponenten

   a) 25 bis 55 Mol-%, vorzugsweise 40 bis 50 Mol-%,
   b) 0,1 bis 15 Mol-%, vorzugsweise 0,5 bis 10 Mol-%,
   c) 10 bis 60 Mol-%, vorzugsweise 30 bis 55 Mol-%,
   d) 0 bis 40 Mol-%, vorzugsweise 5 bis 30 Mol-%, und
   e) 0 bis 20 Mol-%, vorzugsweise 0 bis 10 Mol-%, der Summe der Monomeren a) bis e) 100 Mol-% ausmachen.

3. Verwendung nach Anspruch 1 oder 2, dadurch gekennzeichnet, daß der Gehalt an Hydroxylgruppen im Polyester 10 bis 350, vorzugsweise 100 bis 250, Millimol OH/100 g Polyester und der Gehalt an freien oder neutralisierten Säuregruppen 5 bis 350, vorzugsweise 9 bis 120, Millimol COOH oder $SO_3H$/100 g Polyester beträgt.

4. Verwendung nach mindestens einem der Ansprüche 1 bis 3, dadurch gekennzeichnet, daß die Komponente a) Oxalsäure, Malonsäure, Glutarsäure, Adipinsäure, Pimelinsäure, Azelainsäure, Sebacinsäure, Fumarsäure, Maleinsäure, Itaconsäure, 1,3-Cyclopentandicarbonsäure, 1,2-Cyclohexandicarbonsäure, 1,3-Cyclohexandicarbonsäure, 1,4-Cyclohexandicarbonsäure, Phthalsäure, Terephthalsäure, Isophthalsäure, 2,5-Norbornandicarbonsäure, 1,4-Naphthalindicarbonsäure, Diphenyldicarbonsäure, 4,4'-Sulfonyldibenzoesäure oder 2,5-Naphthalindicarbonsäure oder ein Ester oder Anhydrid oder eine Mischung zweier oder mehrerer der genannten Verbindungen ist.

5. Verwendung nach mindestens einem der Ansprüche 1 bis 4, dadurch gekennzeichnet, daß die Komponente b) eine Sulfoisophthalsäure, Sulfoterephthalsäure, Sulfophthalsäure, Sulfosalicylsäure, Sulfobernsteinsäure, ein Alkylester oder ein Na-Salz der genannten Sulfosäuren oder einer Mischung zweier oder mehrerer der genannten Verbindungen ist.

6. Verwendung nach mindestens einem der Ansprüche 1 bis 5, dadurch gekennzeichnet, daß die Komponente c) Ethylenglykol, 1,2-Propandiol, 1,3-Propandiol, 2,2-Dimethyl-1,3-propandiol, 1,3-Butandiol, 1,4-Butandiol, 1,5-Pentandiol, 1,6-Hexandiol, 2,2,4-Trimethyl-1,6-hexandiol, 1,2-Cyclohexandimethanol, 1,3-Cyclohexandimethanol, 1,4-Cyclohexandimethanol, Di(4-hydroxy-cyclohexyl)-2,2'-isopropan, p-Xylylendiol, 2-Ethyl- oder 2-Butylpropandiol, ein Poly(oxytetramethylen)glykol, Poly(oxyethylen)glykol, Poly(oxypropylen)glykol oder ein Umsetzungsprodukt von Propandiol-1,3, Butandiol-1,4, Hexandiol-1,6, Diethylenglykol, Triethylenglykol, 1,4-Bishydroxymethylcyclohexan, 2,2-Bis(4-hydroxycyclohexyl)propan oder Neopentylglykol mit Dimethylcarbonat, Diethylcarbonat, Diphenylcarbonat oder Phosgen oder eine Mischung zweier oder mehrerer der genannten Verbindungen ist.

**7.** Verwendung nach mindestens einem der Ansprüche 1 bis 6, dadurch gekennzeichnet, daß die Komponente d) Trimethylolpropan, Trimethylolethan, Glycerin, Ditrimethylolpropan, Pentaerythrit, Dipentaerythrit, eine Bishydroxyalkancarbonsäure, Trimellitsäureanhydrid, ein Polyanhydrid, ein Polycarbonatpolyol oder eine Mischung zweier oder mehrerer der genannten Verbindungen ist.

**8.** Verwendung nach mindestens einem der Ansprüche 1 bis 7, dadurch gekennzeichnet, daß die Komponente e) eine gesättigte oder ungesättigte $C_{12}$-$C_{18}$-Fettsäure oder eine verzweigte aliphatische $C_5$-$C_{10}$-Carbonsäure ist.

**9.** Verwendung nach mindestens einem der Ansprüche 1 bis 8, dadurch gekennzeichnet, daß die kationische Komponente ein Diallylammoniumkation der allgemeinen Formel (1) ist,

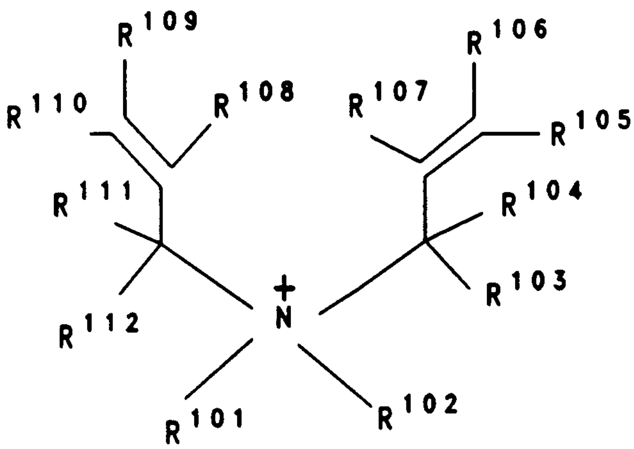

(1)

wobei die Reste

$R^{101}$ bis $R^{112}$ unabhängig voneinander jeweils ein Wasserstoffatom, Halogenatom, einen Hydroxyl-Rest, einen Alkoxy-Rest, einen primären, sekundären oder tertiären Amino-Rest, einen Carbonsäure- oder Carbonsäureester-Rest, einen Acylrest, einen Sulfonsäure- oder Sulfonsäureester-Rest, einen Cyano- oder Nitro-Rest oder einen Rest auf Basis eines $C_1$-$C_{30}$-aliphatischen, $C_7$-$C_{60}$-araliphatischen oder $C_6$-$C_{30}$-aromatischen Kohlenwasserstoffs, der durch Heteroatome unterbrochen sein kann, bedeuten.

**10.** Verwendung nach mindestens einem der Ansprüche 1 bis 8, dadurch gekennzeichnet, daß die kationische Komponente ein homo- oder copolymeres Pyrrolidinium-Kation der allgemeinen Formel (2) ist,

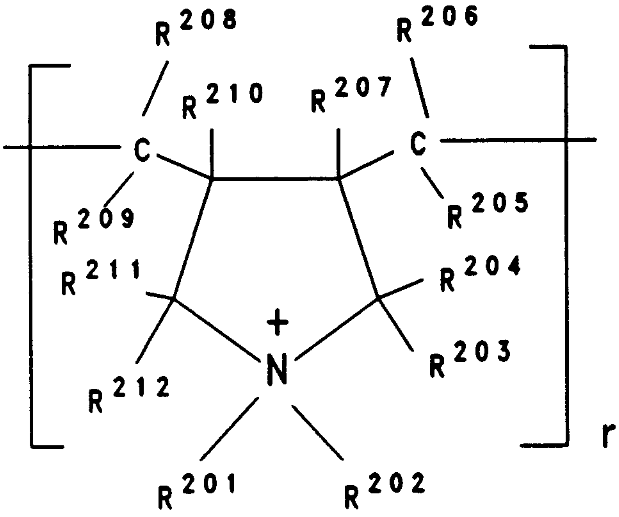

(2)

und wobei die Reste

$R^{201}$ bis $R^{212}$ unabhängig voneinander jeweils ein Wasserstoffatom, Halogenatom, einen Hydroxyl-Rest, einen Alkoxy-Rest, einen primären, sekundären oder tertiären Amino-Rest, einen Carbonsäure- oder Carbonsäureester-Rest, einen Acylrest, einen Sulfonsäure- oder Sulfonsäureester-Rest, einen Cyano- oder Nitro-Rest oder einen Rest auf Basis eines $C_1$-$C_{30}$-aliphatischen, $C_7$-$C_{60}$-araliphatischen oder $C_6$-$C_{30}$-aromatischen Kohlenwasserstoffs, der durch Heteroatome unterbrochen sein kann, bedeuten.

**11.** Verwendung nach mindestens einem der Ansprüche 1 bis 8, dadurch gekennzeichnet, daß die kationische Komponente ein homo- oder copolymeres Morpholinium- oder Pyrrolidinium-Kation ist, das durch Cyclisierung eines Diallylammonium-Kations der Formel (1) gemäß Anspruch 9 zu einem Sechsring oder Fünfring entsteht, und durch ein oder mehrere zweiwertige Reste $-SO_2$-miteinander zu einem Polymer verbunden ist,
wobei die so entstandenen Polymerkationen ein Molekulargewicht zwischen 500 und 5 000 000 haben und
das Verhältnis der Anzahl der Diallylammonium-Kationen und der Anzahl der zweiwertigen $-SO_2$-Reste 1:0,01 bis 1:100 beträgt.

**12.** Verwendung nach mindestens einem der Ansprüche 1 bis 8, dadurch gekennzeichnet, daß die kationische Komponente ein hochgradig fluoriertes Ammoniumion der allgemeinen Formel (3)

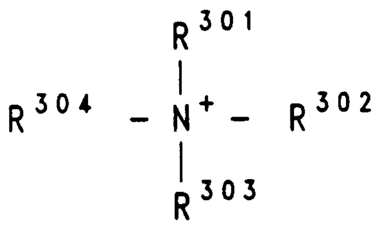

(3)

ist, in welcher mindestens einer der Reste $R^{301}$ bis $R^{302}$ einen geradkettigen fluorhaltigen ungesättigten und/oder gesättigten Alkylrest mit 4 bis 30 C-Atomen und höchstens drei der Reste $R^{301}$ bis $R^{304}$ unabhängig voneinander Wasserstoff oder geradkettige oder verzweigte Alkyl- oder Hydroxyalkylreste mit 1 bis 30 C-Atomen bedeuten.

**13.** Verwendung nach mindestens einem der Ansprüche 1 bis 8, dadurch gekennzeichnet, daß die kationische Komponente ein Immonium-Kation der allgemeinen Formel (4) ist,

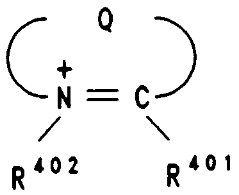

(4)

in welcher Q zusammen mit dem Bestandteil -N=C- ein ein- oder mehrkerniges Ringsystem mit 4 bis 17 C-Atomen, das zusätzlich durch 1 bis 4 Heteroatome unterbrochen sein und 2 bis 9 Doppelbindungen enthalten kann, welches in beliebiger Position durch Fluor-, Chlor-, Brom- oder Jodatome, Alkoxy($C_1$-$C_6$)-, Alkyl($C_1$-$C_6$)-, Nitro- oder Aminogruppen substituiert sein kann, $R^{402}$ einen fluorhaltigen Alkyl($C_1$-$C_{30}$)-Rest und $R^{401}$ ein Wasserstoff-, Fluor-, Chlor-, Brom- oder Jodatom, eine Alkyl($C_1$-$C_6$)-, Alkoxy($C_1$-$C_6$)-, Nitro- oder Aminogruppe bedeuten.

**14.** Verwendung nach mindestens einem der Ansprüche 1 bis 8, dadurch gekennzeichnet, daß die kationische Komponente in Pulvern und Pulverlacken sowie in Elektretmaterialien ein hochgradig fluoriertes Phosphoniumion der allgemeinen Formel (5) ist,

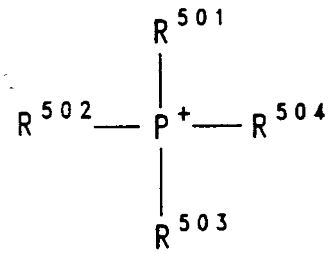

(5)

in welcher mindestens einer der Reste $R^{501}$ bis $R^{504}$ einen geradkettigen oder verzweigten, fluorsubstituierten, gesättigten Alkylrest mit 1 bis 30 C-Atomen und 3 bis 50 F-Atomen bedeutet, welcher weitere Halogenatome, Hydroxyl-, Chlormethyl-, Carbonsäureamid-, Sulfonsäureamid-, Urethan-, Keto-, Amino- oder $R^{505}$-O-$R^{506}$-Gruppen, worin $R^{505}$ und $R^{506}$ Alkyl($C_1$-$C_{30}$)-Reste darstellen, enthalten kann, oder mindestens einer der Reste $R^{501}$ bis $R^{504}$ einen fluorsubstituierten Arylrest oder einen am aromatischen Kern fluorsubstituierten Aralkylrest darstellt, wobei der Aryl- oder Aralkylrest am aromatischen Kern zusätzlich durch gesättigte oder ungesättigte, geradkettige oder verzweigte Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder weitere Halogenatome substituiert sein kann und im Falle eines Aralkylrestes die Alkylbrücke zwischen Phosphoratom und aromatischem Ring 1 bis 30 C-Atome enthält, und höchstens drei der Reste $R^{501}$ bis $R^{504}$ unabhängig voneinander Wasserstoffatome, geradkettige oder verzweigte, ungesättigte oder gesättigte, substituierte oder unsubstituierte Alkylreste mit 1 bis 30 C-Atomen, Aryl- oder Aralkylreste, die am aromatischen Kern durch Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder Halogenatome substituiert sein können, bedeuten; oder daß die kationische Komponente ein Kation der Formel (6) ist,

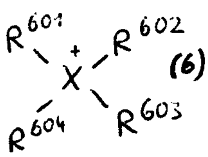

(6)

worin X die Bedeutung P, As oder Sb hat und die Reste $R^{601}$ bis $R^{604}$ die für $R^{101}$ bis $R^{112}$ genannten Bedeutungen haben.

**15.** Verwendung nach mindestens einem der Ansprüche 1 bis 8, dadurch gekennzeichnet, daß die kationische Komponente ein Kation der Formeln (7) oder (8) ist,

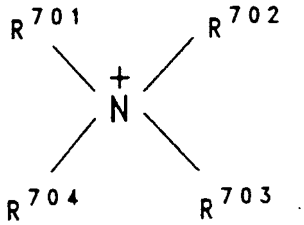

(7)

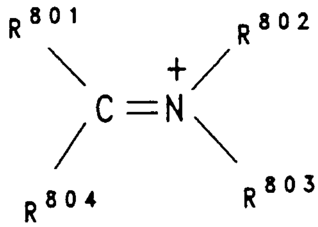

(8)

worin die Reste $R^{601}$ bis $R^{604}$, $R^{701}$ bis $R^{704}$ und $R^{801}$ bis $R^{804}$ unabhängig voneinander jeweils ein Wasserstoffatom, Halogenatom, einen Hydroxyl-Rest, einen Alkoxy-Rest, einen primären, sekundären oder tertiären Amino-Rest, einen Carbonsäure- oder Carbonsäureester-Rest, einen Acylrest, einen Sulfonsäure- oder Sulfonsäureester-Rest, einen Cyano- oder Nitro-Rest oder einen Rest auf Basis eines $C_1$-$C_{30}$-aliphatischen, $C_7$-$C_{60}$-araliphatischen oder $C_6$-$C_{30}$-aromatischen Kohlenwasserstoffs, der durch Heteroatome unterbrochen sein kann, bedeuten.

**16.** Verwendung nach mindestens einem der Ansprüche 1 bis 8, dadurch gekennzeichnet, daß die kationische Komponente $Na^+$, $K^+$, $Ca^{2+}/_2$, $Mg^{2+}/_2$, $Cr^{3+}/_3$, $Al^{3+}/_3$, $Fe^{2+}/_2$, $Fe^{3+}/_3$, $Zn^{2+}/_2$, oder eine Kombination dieser Kationen ist.

**17.** Polymersalz, dessen anionische Komponente ein Polyester ist, der aus dem Reaktionsprodukt der einzelnen Komponenten a), b) und c) sowie gegebenenfalls d) und gegebenenfalls e) besteht, wobei

a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung mit einer Funktionalität > 2, deren funktionelle Gruppen Hydroxyl oder Carboxyl, oder Hydroxyl und Carboxyl, sind und
e) eine Monocarbonsäure ist

und dessen kationische Komponente Metallkationen, substituierte Ammoniumionen, Immonium-Kationen, Guanidinium-Kationen, oder ein Gemisch der genannten Kationen ist.

**18.** Polymersalz nach Anspruch 17, dadurch gekennzeichnet, daß die Komponenten

a) 25 bis 55 Mol-%, vorzugsweise 40 bis 50 Mol-%,
b) 0,1 bis 15 Mol-%, vorzugsweise 0,5 bis 10 Mol-%,
c) 10 bis 60 Mol-%, vorzugsweise 30 bis 55 Mol-%,
d) 0 bis 40 Mol-%, vorzugsweise 5 bis 30 Mol-%, und
e) 0 bis 20 Mol-%, vorzugsweise 0 bis 10 Mol-%, der Summe der Monomeren a) bis e) 100 Mol-% ausmachen.

**19.** Polymersalz nach Anspruch 17 oder 18, dadurch gekennzeichnet, daß der Gehalt an Hydroxylgruppen im Polyester 10 bis 350, vorzugsweise 100 bis 250, Millimol OH/100 g Polyester und der Gehalt an freien oder neutralisierten Säuregruppen 5 bis 350, vorzugsweise 9 bis 120, Millimol COOH oder $SO_3H$/100 g Polyester beträgt.

**20.** Polymersalz nach mindestens einem der Ansprüche 17 bis 19, dadurch gekennzeichnet, daß die anionische Komponente ein Polyester ist, der aus dem Reaktionsprodukt der in den Ansprüchen 4 bis 8 genannten Komponenten a), b) und c) sowie gegebenenfalls d) und gegebenenfalls e) besteht.

**21.** Polymersalz nach mindestens einem der Ansprüche 17 bis 20, dadurch gekennzeichnet, daß die kationische Komponente ein oder mehrere der in den Ansprüchen 10 bis 15 genannten Kationen ist.

**22.** Polymersalz nach mindestens einem der Ansprüche 17 bis 21, dadurch gekennzeichnet, daß die kationische Kom-

ponente $Na^+$, $K^+$, $Mg^{2+}/_2$, $Ca^{2+}/_2$, $Cr^{3+}/_3$, $Al^{3+}/_3$, $Fe^{2+}/_2$, $Fe^{3+}/_3$, $Zn^{2+}/_2$ oder eine Kombination dieser Kationen ist.

**23.** Verfahren zur Herstellung eines Polymersalzes gemäß mindestens einem der Ansprüche 17 bis 22, dadurch gekennzeichnet, daß der Polyester in Dispersion, in wäßriger Lösung, die bis zu 15 Gew.-% eines organischen Lösemittels enthalten kann, oder in organischen Lösungsmitteln, insbesondere mit Wasser mischbaren organischen Lösemitteln, gelöst vorliegt und mit einer wäßrigen Lösung eines Salzes der kationischen Komponente unter Ionenaustausch umgesetzt wird.

**Claims**

**1.** The use of polymer salts whose anionic component is a polyester which comprises the product of reaction of the individual components a), b) and c) and if desired d) and if desired e), where

a) is a dicarboxylic acid or a reactive derivative of a dicarboxylic acid, being free from sulfo groups,
b) is a difunctional aromatic, aliphatic or cycloaliphatic sulfo compound whose functional groups are hydroxyl or carboxyl, or hydroxyl and carboxyl,
c) is an aliphatic, cycloaliphatic or aromatic diol, a polyetherdiol or a polycarbonatediol,
d) is a polyfunctional compound having a functionality > 2 whose functional groups are hydroxyl or carboxyl, or hydroxyl and carboxyl, and
e) is a monocarboxylic acid

and whose cationic component comprises hydrogen atoms, metal cations, substituted ammonium cations, immonium cations, guanidinium cations, or a mixture of the abovementioned cations,
as charge control agents and charge improvers in electrophotographic toners and developers, in triboelectrically or electrokinetically sprayable powders and powder coating, and in electret materials, where, in said powders and powder coatings, and in electret materials, the cationic component can also comprise phosphonium, arsonium or stibonium cations.

**2.** The use as claimed in claim 1, wherein the components make up

a) from 25 to 55 mol%, preferably from 40 to 50 mol%,
b) from 0.1 to 15 mol%, preferably from 0.5 to 10 mol%,
c) from 10 to 60 mol%, preferably from 30 to 55 mol%,
d) from 0 to 40 mol%, preferably from 5 to 30 mol%, and
e) from 0 to 20 mol%, preferably from 0 to 10 mol%, of the sum of monomers a) to e) 100 mol%.

**3.** The use as claimed in claim 1 or 2, wherein the content of hydroxyl groups in the polyester is from 10 to 350, preferably from 100 to 250, mmol of OH/100 g of polyester and the content of free or neutralized acid groups is from 5 to 350, preferably from 9 to 120, mmol of COOH or of $SO_3H$/100 g of polyester.

**4.** The use as claimed in at least one of claims 1 to 3, wherein component a) is oxalic acid, malonic acid, glutaric acid, adipic acid, pimelic acid, azelaic acid, sebacic acid, fumaric acid, maleic acid, itaconic acid, 1,3-cyclopentanedicarboxylic acid, 1,2-cyclohexanedicarboxylic acid, 1,3-cyclohexanedicarboxylic acid, 1,4-cyclohexanedicarboxylic acid, phthalic acid, terephthalic acid, isophthalic acid, 2,5-norbornanedicarboxylic acid, 1,4-naphthalenedicarboxylic acid, biphenyldicarboxylic acid, 4,4'-sulfonyldibenzoic acid or 2,5-naphthalenedicarboxylic acid or an ester or an anhydride or a mixture of two or more of the compounds mentioned.

**5.** The use as claimed in at least one of claims 1 to 4, wherein component b) is a sulfoisophthalic acid, sulfoterephthalic acid, sulfophthalic acid, sulfosalicylic acid, sulfosuccinic acid, an alkyl ester or a sodium salt of the sulfo acids mentioned or a mixture of two or more of the compounds mentioned.

**6.** The use as claimed in at least one of claims 1 to 5, wherein component c) is ethylene glycol, 1,2-propanediol, 1,3-propanediol, 2,2-dimethyl-1,3-propanediol, 1,3-butanediol, 1,4-butanediol, 1,5-pentanediol, 1,6-hexanediol, 2,2,4-trimethyl-1,6-hexanediol, 1,2-cyclohexanedimethanol, 1,3-cyclohexanedimethanol, 1,4-cyclohexanedimethanol, 2,2'-bis(4-hydroxycyclohexyl)isopropane, p-xylylenediol, 2-ethylpropanediol or 2-butylpropanediol, a poly(oxytetramethylene) glycol, poly(oxyethylene) glycol, poly(oxypropylene) glycol or a reaction product of propane-1,3-diol, butane-1,4-diol, hexane-1,6-diol, diethylene glycol, triethylene glycol, 1,4-bis(hydroxymethyl)cyclohexane, 2,2-bis(4-hydroxycyclohexyl)propane or neopentylglycol with dimethyl carbonate, diethyl carbonate, diphenyl carbonate or phosgene, or a mixture of two or more of the compounds mentioned.

7. The use as claimed in at least one of claims 1 to 6, wherein component d) is trimethylolpropane, trimethylolethane, glycerol, ditrimethylolpropane, pentaerythritol, dipentaerythritol, a bishydroxyalkanecarboxylic acid, trimellitic anhydride, a polyanhydride, a polycarbonatepolyol or a mixture of two or more of the compounds mentioned.

8. The use as claimed in at least one of claims 1 to 7, wherein component e) is a saturated or unsaturated $C_{12}$-$C_{18}$ fatty acid or a branched aliphatic $C_5$-$C_{10}$ carboxylic acid.

9. The use as claimed in at least one of claims 1 to 8, wherein the cationic component is a diallylammonium cation of the formula (1)

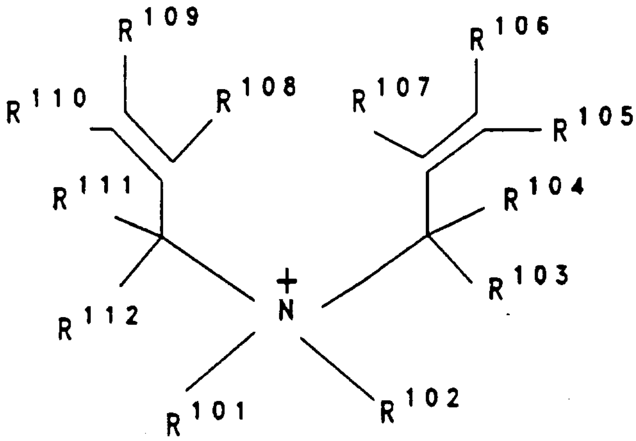

(1)

in which the radicals

$R^{101}$ to $R^{112}$ independently of one another are each a hydrogen atom, halogen atom, a hydroxyl radical, an alkoxy radical, a primary, secondary or tertiary amino radical, a carboxylic acid or carboxylic ester radical, an acyl radical, a sulfonic acid or sulfonic ester radical, a cyano or nitro radical or a radical based on a $C_1$-$C_{30}$ aliphatic, $C_7$-$C_{60}$ araliphatic or $C_6$-$C_{30}$ aromatic hydrocarbon, which may be interrupted by heteroatoms.

10. The use as claimed in at least one of claims 1 to 8, wherein the cationic component is a homo- or copolymeric pyrrolidinium cation of the formula (2)

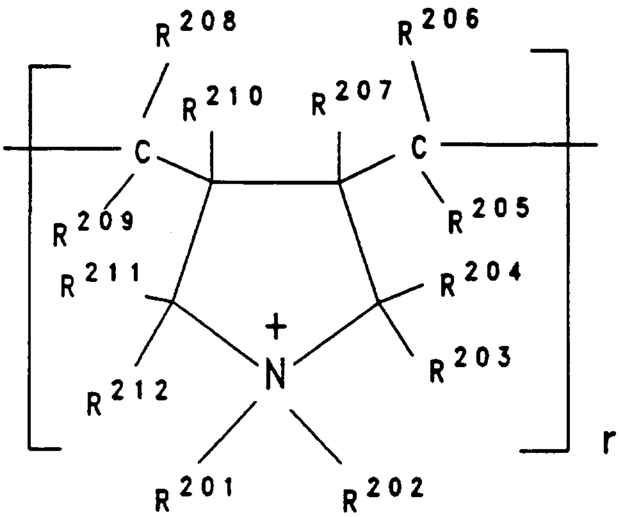

(2)

and in which the radicals

$R^{201}$ to $R^{212}$ independently of one another are each a hydrogen atom, halogen atom, a hydroxyl radical, an alkoxy radical, a primary, secondary or tertiary amino radical, a carboxylic acid or carboxylic ester radical, an acyl radical, a sulfonic acid or sulfonic ester radical, a cyano or nitro radical or a radical based on a $C_1$-$C_{30}$ aliphatic, $C_7$-$C_{60}$ araliphatic or $C_6$-$C_{30}$ aromatic hydrocarbon, which may be interrupted by heteroatoms.

**11.** The use as claimed in at least one of claims 1 to 8, wherein the cationic component is a homo- or copolymeric morpholinium or pyrrolidinium cation which is formed by cyclization of a diallylammonium cation of the formula (1) according to claim 9 to form a six-membered or five-membered ring, and which is joined together by one or more divalent radicals $-SO_2-$ to form a polymer,
the resulting polymer cations having a molecular weight of between 500 and 5,000,000 and
the ratio of the number of diallylammonium cations to the number of divalent $-SO_2-$ radicals being from 1:0.01 to 1:100.

**12.** The use as claimed in at least one of claims 1 to 8, wherein the cationic component is a highly fluorinated ammonium ion of the formula (3)

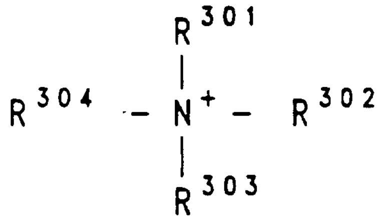

(3)

in which at least one of the radicals $R^{301}$ to $R^{302}$ is a straight-chain fluorine-containing unsaturated and/or saturated alkyl radical of 4 to 30 carbon atoms, and not more than three of the radicals $R^{301}$ to $R^{304}$, independently of one another, are hydrogen or straight-chain or branched alkyl or hydroxyalkyl radicals of 1 to 30 carbon atoms.

**13.** The use as claimed in at least one of claims 1 to 8, wherein the cationic component is an immonium cation of the formula (4)

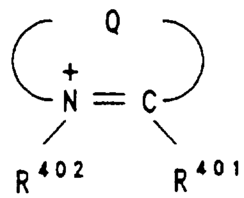

(4)

in which Q, together with the component -N=C-, is a mono- or polycyclic ring system of 4 to 17 carbon atoms which may additionally be interrupted by 1 to 4 heteroatoms and may contain 2 to 9 double bonds and which, in any desired position, may be substituted by fluorine, chlorine, bromine or iodine atoms, alkoxy($C_1$-$C_6$), alkyl($C_1$-$C_6$), nitro or amino groups, $R^{402}$ is a fluorine-containing alkyl ($C_1$-$C_{30}$) radical and $R^{401}$ is a hydrogen, fluorine, chlorine, bromine or iodine atom, an alkyl($C_1$-$C_6$), alkoxy($C_1$-$C_6$), nitro or amino group.

**14.** The use as claimed in at least one of claims 1 to 8, wherein the cationic component in powders and powder coatings, and in electret materials, is a highly fluorinated phosphonium ion of the formula (5)

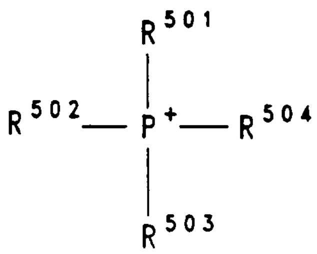

(5)

in which at least one of the radicals $R^{501}$ to $R^{504}$ is a straight-chain or branched, fluorine-substituted, saturated alkyl radical of 1 to 30 carbon atoms and 3 to 50 fluorine atoms, which may contain further halogen atoms, hydroxyl, chloromethyl, carboxamide, sulfonamide, urethane, keto, amino or $R^{505}$-O-$R^{506}$ groups, in which $R^{505}$ and $R^{506}$ are alkyl($C_1$-$C_{30}$) radicals, or at least one of the radicals $R^{501}$ to $R^{504}$ is a fluorine-substituted aryl radical or an aralkyl radical whose aromatic ring system is substituted by fluorine, the aryl or aralkyl radical being possibly substituted on the aromatic ring system, in addition, by saturated or unsaturated, straight-chain or branched alkyl($C_1$-$C_{30}$), alkoxy($C_1$-$C_{30}$), haloalkyl($C_1$-$C_{30}$), haloalkoxy($C_1$-$C_{30}$) or hydroxyl groups or by further halogen atoms, and, in the case of an aralkyl radical, the alkyl bridge between phosphorus atom and aromatic ring contains 1 to 30 carbon atoms, and not more than three of the radicals $R^{501}$ to $R^{504}$ independently of one another are hydrogen atoms, straight-chain or branched, unsaturated or saturated, substituted or unsubstituted alkyl radicals of 1 to 30 carbon atoms or are aryl or aralkyl radicals which may be substituted in the aromatic ring system by alkyl($C_1$-$C_{30}$), alkoxy($C_1$-$C_{30}$), haloalkyl($C_1$-$C_{30}$), haloalkoxy($C_1$-$C_{30}$), or hydroxyl groups or by halogen atoms, or wherein the cationic component is a cation of the formula (6)

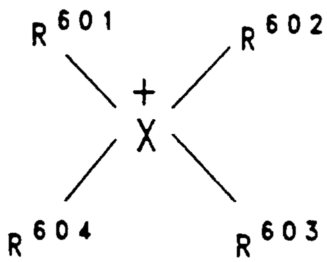

(6)

in which X is P, As or Sb and the radicals $R^{601}$ to $R^{604}$ are as defined for $R^{101}$ to $R^{112}$.

15. The use as claimed in at least one of claims 1 to 8, wherein the cationic component is a cation of the formula (7) or (8)

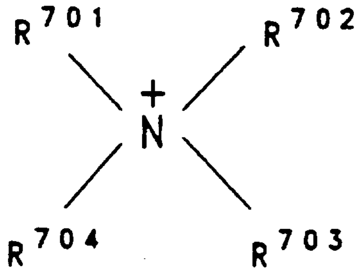

(7)

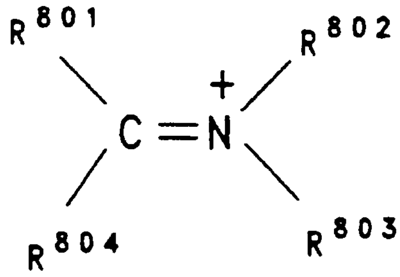

(8)

in which the radicals $R^{601}$ to $R^{604}$, $R^{701}$ to $R^{704}$ and $R^{801}$ to $R^{804}$ are independently of one another each a hydrogen atom, halogen atom, a hydroxyl radical, an alkoxy radical, a primary, secondary or tertiary amino radical, a carboxylic acid or carboxylic ester radical, an acyl radical, a sulfonic acid or sulfonic ester radical, a cyano or nitro radical or a radical based on a $C_1$-$C_{30}$ aliphatic, $C_7$-$C_{60}$ araliphatic or $C_6$-$C_{30}$ aromatic hydrocarbon, which may be interrupted by heteroatoms.

**16.** The use as claimed in at least one of claims 1 to 8, wherein the cationic component is $Na^+$, $K^+$, $Ca^{2+}/_2$, $Mg^{2+}/_2$, $Cr^{3+}/_3$, $Al^{3+}/_3$, $Fe^{2+}/_2$, $Fe^{3+}/_3$, $Zn^{2+}/_2$, or a combination of these cations.

**17.** A polymer salt whose anionic component is a polyester which comprises the product of reaction of the individual components a), b) and c) and if desired d) and if desired e), where

a) is a dicarboxylic acid or a reactive derivative of a dicarboxylic acid, being free from sulfo groups,
b) is a difunctional aromatic, aliphatic or cycloaliphatic sulfo compound whose functional groups are hydroxyl or carboxyl, or hydroxyl and carboxyl,
c) is an aliphatic, cycloaliphatic or aromatic diol, a polyetherdiol or a polycarbonatediol,
d) is a polyfunctional compound having a functionality > 2 whose functional groups are hydroxyl or carboxyl, or hydroxyl and carboxyl, and
e) is a monocarboxylic acid

and whose cationic component comprises metal cations, substituted ammonium ions, immonium cations, guanidinium cations, or a mixture of the abovementioned cations.

**18.** A polymer salt as claimed in claim 17, wherein the components make up

a) from 25 to 55 mol%, preferably from 40 to 50 mol%,
b) from 0.1 to 15 mol%, preferably from 0.5 to 10 mol%,
c) from 10 to 60 mol%, preferably from 30 to 55 mol%,
d) from 0 to 40 mol%, preferably from 5 to 30 mol%, and
e) from 0 to 20 mol%, preferably from 0 to 10 mol%, of the sum of monomers a) to e) 100 mol%.

**19.** A polymer salt as claimed in claim 17 or 18, wherein the content of hydroxyl groups in the polyester is from 10 to 350, preferably from 100 to 250, mmol of OH/100 g of polyester and the content of free or neutralized acid groups is from 5 to 350, preferably from 9 to 120, mmol of COOH or $SO_3H$/100 g of polyester.

**20.** A polymer salt as claimed in at least one of claims 17 to 19, wherein the anionic component is a polyester which comprises the product of reaction of components a), b) and c) and if desired d) and if desired e), as defined in claims 4 to 8.

**21.** A polymer salt as claimed in at least one of claims 17 to 20, wherein the cationic component comprises one or more of the cations mentioned in claims 10 to 15.

**22.** A polymer salt as claimed in at least one of claims 17 to 21, wherein the cationic component is $Na^+$, $K^+$, $Mg^{2+}/_2$, $Ca^{2+}/_2$, $Cr^{3+}/_3$, $Al^{3+}/_3$, $Fe^{2+}/_2$, $Fe^{3+}/_3$, $Zn^{2+}/_2$ or a combination of these cations.

**23.** A process for the preparation of a polymer salt as claimed in at least one of claims 17 to 22, wherein the polyester is present in dispersion, in aqueous solution which may contain up to 15 % by weight of an organic solvent, or dissolved in organic solvents, especially water-miscible organic solvents, and undergoes an ion exchange reaction with an aqueous solution of a salt of the cationic component.

**Revendications**

**1.** Utilisation de sels de polymères, dont le composant anionique est un polyester constitué par le produit de réaction des différents composants a), b) et c), ainsi qu'éventuellement d) et éventuellement e), où

a) un acide dicarboxylique ou un dériVé réactif d'un acide dicarboxylique, exempts de groupes sulfo,
b) un composé sulfo aliphatique, cycloaliphatique ou aromatique bifonctionnel, dont les groupes fonctionnels sont les groupes hydroxyle ou carboxyle, ou hydroxyle et carboxyle,
c) un polyétherdiol, un polycarbonatediol ou un diol aliphatique, cycloaliphatique ou aromatique,
d) un composé polyfonctionnel ayant une fonctionnalité >2, dont les groupes fonctionnels sont des groupes hydroxyle ou carboxyle, ou hydroxyle et carboxyle,
e) un acide monocarboxylique,

et dont les composants cationiques sont des atomes d'hydrogène, des cations métalliques, des cations d'immonium, des cations de guanidinium, des cations d'ammonium substitué ou un mélange des cations précités, en tant qu'agents de contrôle de charge et agents d'amélioration de chargement dans des toners et révélateurs électrophotographiques, des poudres et laques en poudre déposées par pulvérisation triboélectrique ou électrocinétique, ainsi que des matières d'électrets, dans lesdites poudres et laques en poudre, ainsi que dans des matières d'électrets, le composant cationique pouvant être aussi des cations phosphonium, arsonium ou stibonium.

**2.** Utilisation selon la revendication 1, caractérisée en ce que les composant étant contenus en une quantité

a) de 25 à 55% molaires, de préférence de 40 à 50% molaires,
b) de 0,1 à 15% molaires, de préférence de 0,5 à 10% molaires,
c) de 10 à 60% molaires, de préférence de 30 à 55% molaires,
d) de 0 à 40% molaires, de préférence de 5 à 30% molaires, et
e) de 0 à 20% molaires, de préférence de 0 à 10% molaires,
par rapport à la somme des monomères a) à e) étant de 100%.

**3.** Utilisation selon la revendication 1 ou 2, caractérisée en ce que la teneur en groupes hydroxyle dans le polyester est de 10 à 350, de préférence de 100 à 250, mmoles OH/100 g de polyester et la teneur en groupes acide libres ou neutralisés de 5 à 350, de préférence de 9 à 120, mmoles de COOH ou de $SO_3H$/100 g de polyester.

**4.** Utilisation selon au moins l'une des revendications 1 à 3, caractérisée en ce que le composant a) est l'acide oxalique, l'acide malonique, l'acide glutarique, l'acide adipique, l'acide pimélique, l'acide azélaïque, l'acide sébacique, l'acide fumarique, l'acide maléïque l'acide itaconique, l'acide 1,3-cyclopentane dicarboxylique, l'acide 1,2-cyclohexane dicarboxylique, l'acide 1,3-cyclohexane dicarboxylique, l'acide 1,4-cyclohexane dicarboxylique, l'acide phtalique, l'acide téréphtalique, l'acide isophtalique, l'acide 2,5-norbornadiène dicarboxylique, l'acide 1,4-naphtalène dicarboxylique, l'acide diphényl dicarboxylique, l'acide 4,4'-sulfonyl dibenzoïque et l'acide 2,5-naphtalène dicarboxylique ou un ester ou anhydride ou un mélange de deux ou plusieurs des composés précités.

**5.** Utilisation selon au moins l'une des revendications 1 à 4, caractérisée en ce que le composant b) est un acide sulfoisophtalique, acide sulfotéréphtalique, acide sulfophtalique, acide sulfosalicylique, acide sulfosuccinique, un ester alkylique ou sel sodique des sulfoacides précités ou un mélange de deux ou plusieurs des composés précités.

**6.** Utilisation selon au moins l'une des revendications 1 à 5, caractérisée en ce que le composant c) est l'éthylène glycol, le 1,2-propane diol, le 1,3-propane diol, le 2,2-diméthyl-1,3-propane diol, le 1,3-butane diol, le 1,4-butane diol, le 1,5-pentane diol, le 1,6-hexane diol, le 2,2,4-triméthyl-1,6-hexane diol, le 1,2-cyclohexane diméthanol, le 1,3-cyclohexane diméthanol, le 1,4-cyclohexane diméthanol, le di(4-hydroxy-cyclohexyl)-2,2'-isopropane, le p-xylylène diol, le 2-éthyl- et le 2-butylpropane diol, un poly(oxytétraméthylène)glycol, le poly(oxyéthylène)-glycol, le poly(oxypropylène)-glycol ou un produit de réaction du propane diol-1,3, le butane diol-1,4, l'hexane diol-1,6, le diéthylène glycol, le triéthylène glycol, le 1,4-bishydroxyméthylcyclohexane, le 2,2-bis(4-hydroxycyclohexyl)propane ou le néopentylglycol avec le carbonate de diméthyle, le carbonate de diéthyle, le carbonate de diphényle ou le phosgène ou un mélange de deux ou plusieurs des composés précités.

**7.** Utilisation selon au moins l'une des revendications 1 à 6, caractérisée en ce que le composant d) est le triméthylol propane, le triméthylol éthane, la glycérine, le ditriméthylol propane, le pentaérythritol, le dipentaérythritol, un acide bishydroxyalcane carboxylique, l'anhydride trimellithique, un polyanhydride, un polycarbonate polyol ou un mélange de deux ou plusieurs des composés précités.

**8.** Utilisation selon au moins l'une des revendications 1 à 7, caractérisée en ce que le composant e) est un acide gras en $C_{12}$-$C_{18}$ insaturé ou un acide carboxylique aliphatique en $C_5$-$C_{10}$ ramifié.

**9.** Utilisation selon au moins l'une des revendications 1 à 8, caractérisée en ce que le composant cationique est un cation de diallylammonium de formule générale (1),

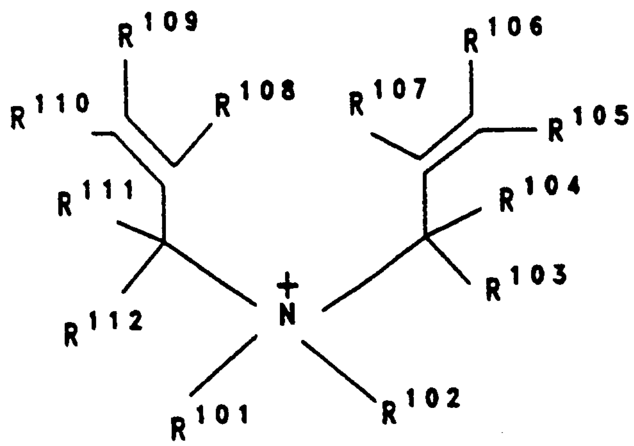

(1)

où les restes

$R^{101}$ et $R^{112}$ représentent chacun, indépendamment l'un de l'autre, un atome d'hydrogène, un atome d'halogène, un reste hydroxyle, un reste alkoxy, un reste amino primaire, secondaire ou tertiaire, un reste acide carboxylique ou ester d'acide carboxylique, un reste acyle, un reste acide sulfonique ou ester d'acide sulfonique, un reste cyano ou nitro ou un reste à base d'un hydrocarbure aliphatique en $C_1$-$C_{30}$, araliphatique en $C_7$-$C_{60}$ ou aromatique en $C_6$-$C_{30}$, lequel peut être interrompu par des hétéroatomes.

**10.** Utilisation selon au moins l'une des revendications 1 à 8, caractérisée en ce que le composant cationique est un cation pyrrolidinium homo- ou copolymère de formule générale (2)

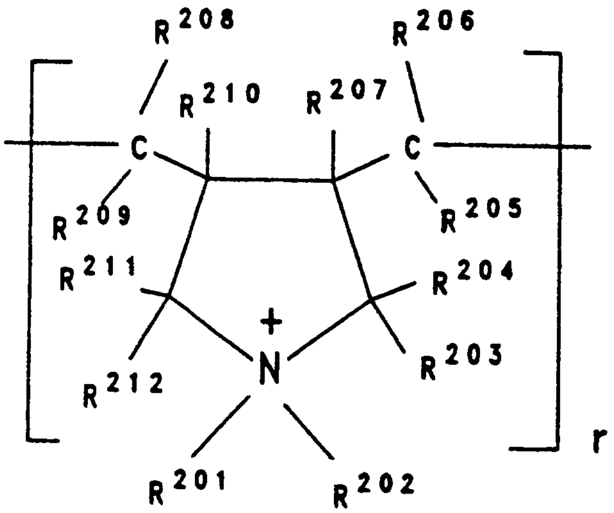

(2)

les restes

$R^{201}$ à $R^{212}$ représentent chacun, indépendamment les uns des autres un atome d'hydrogène, un atome d'halogène, un reste hydroxyle, un reste alkoxy, un reste amino primaire, secondaire ou tertiaire, un reste acide carboxylique ou ester d'acide carboxylique, un reste acyle, un reste acide sulfonique ou ester d'acide sulfonique, un reste cyano ou nitro, ou un reste à base d'un hydrocarbure aliphatique en $C_1$-$C_{30}$, araliphatique en $C_7$-$C_{60}$ ou aromatique en $C_6$-$C_{30}$, lequel peut être interrompu par des hétéroatomes.

**11.** Utilisation selon au moins l'une des revendications 1 à 8, caractérisée en ce que le composant cationique est un cation morpholinium ou pyrrolidinium homo- ou copolymère, lequel est formé par cyclisation en un cycle à six chaînons ou cinq chaînons d'un cation diallylammonium de formule (1) selon la revendication 1, et lequel est relié par un ou plusieurs restes $-SO_2-$ à un polymère,
les cations polymères formés présentant une masse molaire comprise entre 500 et 5 000 000 et
le rapport entre le nombre des cations diallylammonium et le nombre des restes $-SO_2-$ bivalents étant de 1:0,01 à 1:100.

**12.** Utilisation selon au moins l'une des revendications 1 à 8, caractérisée en ce que le composant cationique est un ion ammonium hautement fluoré de formule générale (3)

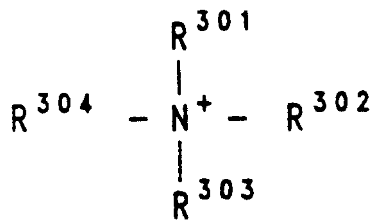

(3)

dans laquelle un des restes $R^{301}$ à $R^{302}$ représentent un reste alkyle linéaire, fluoré, saturé et/ou insaturé, présentant 4 à 30 atomes de carbone et trois des restes $R^{301}$ à $R^{304}$ au maximum représentent, indépendamment les uns des autres, des atomes d'hydrogène ou des groupes alkyle ou hydroxyalkyle linéaires ou ramifiés présentant 1 à 30 atomes de carbone.

**13.** Utilisation selon au moins l'une des revendications 1 à 8, caractérisée en ce que le composant cationique est un ion immonium de formule générale (4)

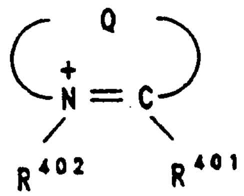

(4)

dans laquelle Q représente, conjointement avec l'élément constitutif -N=C-, un système cyclique à mono- ou polynucléaire comportant de 4 à 17 atomes de carbone, lequel peut de plus être interrompu par 1 à 4 hétéroatomes et présenter 2 à 9 doubles liaisons, lequel peut être substitué en position arbitraire par des atomes de fluor, de chlore, de brome ou d'iode, des groupes alkoxy en $C_1$-$C_6$, alkyle en $C_1$-$C_6$, nitro ou amino, $R^{402}$ représente un reste alkyle en $C_1$-$C_{30}$ fluoré et $R^{401}$ représente un atome d'hydrogène, de fluor, de chlore, de brome ou d'iode, des groupes alkoxy en $C_1$-$C_6$, alkyle en $C_1$-$C_6$, nitro ou amino.

**14.** Utilisation selon au moins l'une des revendications 1 à 8, caractérisée en ce que le composant cationique dans des poudres et laques en poudre ainsi que dans de matières d'électrets est un ions phosphonium hautement fluoré de formule générale (5)

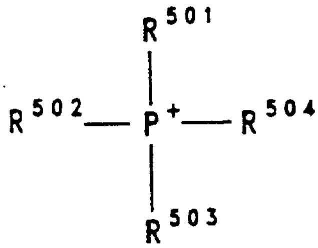

(5)

dans laquelle au moins un des restes $R^{501}$ à $R^{504}$ représente un reste alkyle linéaire ou ramifié, substitué par le fluor, saturé, comportant de 1 à 30 atomes de C et de 3 à 50 atomes de F, lequel peut présenter d'autres atomes d'halogènes, des groupes hydroxyle, chlorométhyle, carboxamido, sulfonamido, uréthanne, céto, amino ou $R^{505}$-O-$R^{506}$, où $R^{505}$ et $R^{506}$ représentent des restes alkyle en $C_1$-$C_{30}$, ou au moins un des restes $R^{501}$ à $R^{504}$ représente un reste aryle fluoré ou un reste aralkyle substitué sur le noyau aromatique par le fluor, le reste aryle ou aralkyle pouvant être suhstitué de plus sur le noyau aromatique par des groupes alkyle en $C_1$-$C_{30}$, alkoxy en $C_1$-$C_{30}$, haloalkyle en $C_1$-$C_{30}$, haloalkoxy en $C_1$-$C_{30}$ linéaire ou ramifié, saturé ou insaturé, des groupes hydroxyle ou d'autres d'halogènes, et dans le cas d'un reste aralkyle, le pont alkyle entre l' atome de phosphore et le cycle aromatique présente de 1 à 30 atomes de C, et trois des restes $R^{501}$ à $R^{504}$ au maximum représentent, indépendamment les uns des autres, des atomes d'hydrogène, des restes alkyle linéaires ou ramifiés, saturés ou insaturés, substitué ou non substitué comportant de 1 à 30 atomes de carbone, des restes aryle ou aralkyle, lesquels peuvent être substitués sur le noyau aromatique par des groupes alkyle en $C_1$-$C_{30}$, alkoxy en $C_1$-$C_{30}$, haloalkyle en $C_1$-$C_{30}$, haloalkoxy en $C_1$-$C_{30}$, hydroxyle ou des atomes d'halogènes ; ou le composant cationique est un cation de formule (6)

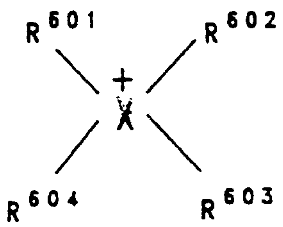

(6)

dans laquelle X possède la signification de P, As ou Sb, et les restes $R^{601}$ à $R^{604}$ possèdent les significations précitées pour $R^{101}$ à $R^{112}$.

**15.** Utilisation selon au moins l'une des revendications 1 à 8, caractérisée en ce que le composant cationique est un cation de formules (7) ou (8)

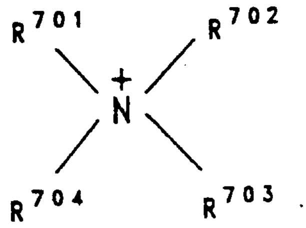

(7)

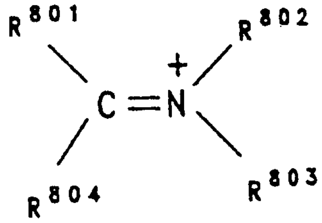

(8)

dans lesquelles les restes $R^{601}$ à $R^{604}$, $R^{701}$ à $R^{704}$ et $R^{801}$ à $R^{804}$ représentent chacun, indépendamment les uns des autres, un atome d'hydrogène, un atome d'halogène, un reste hydroxyle, un reste alkoxy, un reste amino primaire, secondaire ou tertiaire, un reste acide carboxylique ou ester d'acide carboxylique, un reste acyle, un reste acide sulfonique ou ester d'acide sulfonique, un reste cyano ou nitro ou un reste à base d'un hydrocarbure aliphatique en $C_1$-$C_{30}$, araliphatique en $C_7$-$C_{60}$ ou aromatique en $C_6$-$C_{30}$, lequel peut être interrompu par des hétéroatomes.

**16.** Utilisation selon au moins l'une des revendications 1 à 8, caractérisée en ce que le composant cationique est $Na^+$, $K^+$, $Ca^{2+}/_2$, $Mg^{2+}/_2$, $Cr^{3+}/_3$, $Al^{3+}/_3$, $Fe^{2+}/_2$, $Fe^{3+}/_3$ et $Zn^{2+}/_2$ ou une combinaison de ces cations.

**17.** Sel de polymère, dont le composant cationique est un polyester, lequel est constitué par le produit de réaction des différents composants a), b) et c) ainsi que éventuellement d) et éventuellement e), où

a) un acide dicarboxylique ou un dérivé réactif d'un acide dicarboxylique, exempts de groupes sulfo,
b) un composé sulfo aliphatique, cycloaliphatique ou aromatique bifonctionnel, dont les groupes fonctionnels sont les groupes hydroxyle ou carboxyle, ou hydroxyle et carboxyle,
c) un polyétherdiol, un polycarbonate-diol ou un diol aliphatique, cycloaliphatique ou aromatique,
d) un composé polyfonctionnel ayant une fonctionnalité >2, dont les groupes fonctionnels sont des groupes hydroxyle ou carboxyle, ou hydroxyle et carboxyle, et
e) un acide monocarboxylique,

et dont les composants cationiques sont des cations métalliques, des cations d'immonium, des cations de guanidinium, des cations d'ammonium substitué, ou un mélange des cations précités.

**18.** Sel de polymère selon la revendication 17, caractérisé en ce que les composants sont contenus en une quantité

a) de 25 à 55% molaires, de préférence de 40 à 50% molaires,
b) de 0,1 à 15% molaires, de préférence de 0,5 à 10% molaires,
c) de 10 à 60% molaires, de préférence de 30 à 55% molaires,
d) de 0 à 40% molaires, de préférence de 5 à 30% molaires, et
e) de 0 à 20% molaires, de préférence de 0 à 10% molaires,
par rapport à la somme des monomères a) à e) étant de 100%.

**19.** Sel de polymère selon la revendication 17 ou 18, caractérisé en ce que le polyester présente une teneur en groupes hydroxyle de 10 à 350, de préférence de 100 à 250 mmoles OH/100 g de polyester et une teneur en groupes acide libres ou neutralisés de 5 a 350, de préférence de 9 à 120 mmoles de COOH ou $SO_3H$/100 g de polyester.

**20.** Sel de polymère selon la revendication 17 à 19, caractérisé en ce que le composant anionique est un polyester constitué par le produit de réaction des composants a), b) et c) ainsi qu'éventuellement d) et éventuellement e) cités aux revendications 4 à 8.

**21.** Sel de polymère selon la revendication 17 à 20, caractérisé en ce que le composant cationique est un ou plusieurs cations cités aux revendications 10 à 15.

**22.** Sel de polymère selon la revendication 17 à 21, caractérisé en ce que le composant cationique est $Na^+$, $K^+$, $Mg^{2+}/_2$, $Ca^{2+}/_2$, $Cr^{3+}/_3$, $Al^{3+}/_3$, $Fe^{2+}/_2$, $Fe^{3+}/_3$, $Zn^{2+}/_2$ ou une combinaison de ces cations.

**23.** Procédé de préparation d'un sel de polymère selon au moins l'une des revendications 17 à 22, caractérisé en ce que le polyester se présente dissout sous forme de dispersion, de solution aqueuse laquelle peut présenter une teneur jusqu'à 15% massiques en un solvant organique, ou dissout dans des solvants organiques, en particulier des solvants organiques miscibles à l'eau, et on le fait réagir avec une solution aqueuse d'un sel du composant cations sous l'échange d'ions.